# EUROPEAN PATENT APPLICATION

(11) **EP 2 312 826 A2**
(43) Date of publication of application: **20.04.2011**
(21) Application number: 10186755.4
(22) Date of filing: 06.10.2010
(51) Int. Cl.: H04N 5/00, H04N 7/24

(54) **Network device, information processing apparatus, stream switching method, information processing method, program, and content distribution system**

(30) Priority: 14.10.2009 JP 2009237473
(71) Applicant: Sony Corporation, Tokyo 108-0075 (JP)
(72) Inventor: Igarashi, Tatsuya, Minato-ku Tokyo 108-0075 (JP)
(74) Representative: Keston, Susan Elizabeth

(57) **Abstract**

There is provided a network device including a stream analysis section for detecting a latest time point of distribution of the reference compressed video data after analyzing each of the multiple compressed data streams generated by single video/audio content, a distribution request processing section for receiving a distribution request for video/audio content transmitted from an information processing apparatus as well as using a distribution time point of the reference compressed video data detected by the stream analysis section to select a compressed data stream to be distributed to the information processing apparatus among the multiple compressed data streams corresponding to the video/audio content related to the distribution request, and a distribution switching section for switching the compressed data streams to be distributed to the information processing apparatus that transmitted the distribution request into the compressed data stream selected by the distribution request processing section.

## Description

The present invention relates to a network device, an information processing apparatus, a stream switching method, an information processing method, a program, and a content distribution system.

An Internet Protocol Television (IPTV), which is a video distribution system using an IP network, can, by distributing a video compressed by a high-efficiency coding technique such as MPEG2, H.264/AVC or the like to a plurality of terminals by IP multicasting, realize a service equivalent to that of a TV system using traditional radio waves.

However, due to the characteristics of the system, the IPTV system needs about 1 to 3 seconds for channel switching, and there is an issue that the time needed for the channel switching is longer compared to a usual digital television broadcast and the like.

This issue results from the two issues as described below. The first issue is that a time is needed for the switching control of data to be distributed to an access network. This is an issue that arises because, in the IPTV system, the access network to a service subscriber's premise is a network of a limited bandwidth (for example, about 10Mbps in the case of ADSL2), and a method of transmitting only the data of a channel being received by a terminal to the access network is adopted.

The second issue is that, since data of the channel is distributed through the access network of a limited data bandwidth, Group of Picture (GOP) length of a compressed video, for example, MPEG2, needs to be longer compared to the digital broadcast, and thus, one is kept waiting until an I picture (IDR picture in the case of AVC) at the beginning of an MPEG2 stream GOP of a channel after switching is received.

Regarding the issues, two methods as described below are being proposed as an approach to speeding up the channel switching of the IPTV. The first method is a method of simultaneously distributing to terminals, as a stream for channel switching, a compressed data acquired by encoding a video signal of a channel at low resolution to low bit rate (for example, see pamphlets of International Publication No. WO 2004/114667 and International Publication No. WO 2004/114668). According to this method, after displaying a compressed data of low bit rate at the time of channel switching, switching to a display according to a compressed data method having a bit rate of the original resolution is performed. The second method is a method of providing, near an access server, a server for caching/buffering an I picture (IDR picture) and for temporarily displaying the I picture by transmitting the I picture at a high speed to a terminal by unicast at the time of channel switching (for example, see specification of US2005/0081244A).

However, the methods described in the pamphlets of International Publication No. WO 2004/114667 and International Publication No. WO 2004/114668 have an issue that the quality of the video for channel switching is poor due to low resolution. Further, the method described in the specification of US2005/0081244A needs to have a special server provided near the access network, and thus, there is an issue that, as the entire system becomes large, the material cost increases proportionally, and the system becomes complicated resulting in the increase in the operational cost.

Further, for both of the methods, there are issues that the protocol at the time of the channel switching and the mechanism for switching the data stream are complicated, and that the implementation thereof in the reproduction system of a terminal is difficult.

In light of the foregoing, it is desirable to provide a network device, an information processing apparatus, a stream switching method, an information processing method, a program and a content distribution system which are capable of realizing the speeding up of channel switching in an IPTV system by a simple method without drastically changing the reproduction system of an existing network device or a terminal.

Various respective aspects and features of the invention are defined in the appended claims. Combinations of features from the dependent claims may be combined with features of the independent claims as appropriate and not merely as explicitly set out in the claims.

According to an embodiment of the present invention, there is provided a network device including a stream analysis section for analyzing each of multiple compressed data streams that are generated from single video/audio content in such a manner that positions of video frames corresponding to reference compressed video data and time points of distribution of the reference compressed video data are different to each other, the reference compressed video data being data, in time series data generated by compressing a video signal, for which decoding of a subsequent video signal can be started without depending on previous data, to detect a latest time point of distribution of the reference compressed video data, a distribution request processing section for receiving a distribution request for video/audio content transmitted from an information processing apparatus which reproduces the video/audio content as well as using a distribution time point of the reference compressed video data that is detected by the stream analysis section, to select a compressed data stream to be distributed to the information processing apparatus among the multiple compressed data streams corresponding to the video/audio content related to the distribution request, and a distribution switching section for switching the compressed data streams to be distributed to the information processing apparatus that transmitted the distribution request into the compressed data stream selected by the distribution request processing section.

The distribution request processing section may hold information relating to a time interval from the distribution of the reference compressed video data to the distribution of a subsequent reference compressed video data, may calculate a time point to distribute the reference compressed video data for a next time for each of the multiple compressed data streams based on a distribution time point of the latest reference compressed video data detected by the stream analysis section and the information relating to the time interval, and may select the compressed data stream, of which time until the calculated time is the shortest, as a compressed data stream to be distributed to the information processing apparatus.

The distribution switching section may perform a process of switching into the compressed data streams so as to complete switching into the compressed data stream selected by the distribution request processing section by the time point calculated by the distribution request processing section.

The network device may further include a buffer to store temporarily compressed data streams for delay time necessary for a process of switching the compressed data streams by the distribution switching section, and the distribution switching section may perform the process of switching of the compressed data streams while distributing the compressed data streams stored in the buffer to the information processing apparatus.

According to another embodiment of the present invention, there is provided an information processing apparatus including a content acquisition section that requests a network device that performs a process of switching multiple compressed data streams generated from single video/audio content in such a manner that positions of video frames corresponding to reference compressed video data and time points of distribution of the reference compressed video data are different to each other, the reference compressed video data being data, in time series data generated by compressing a video signal, for which decoding of a subsequent video signal can be started without depending on previous data, for a distribution of all the multiple compressed data streams corresponding to the video/audio content necessary to be acquired, and that acquires the video/audio content from the network device.

It is preferable that the multiple compressed data streams are assigned with unique network addresses which are different to each other, and that the content acquisition section notifies the network device of the network addresses which are assigned to all the compressed data streams corresponding to the video/audio content necessary to be acquired, and sets the network addresses assigned to the compressed data streams that are distributed from the network device, among the network addresses notified to the network device, as a network address corresponding to the video/audio content necessary to be acquired.

According to another embodiment of the present invention, there is provided a stream switching method including the steps of detecting a latest time point of distribution of the reference compressed video data, after analyzing each of multiple compressed data streams that are generated from single video/audio content in such a manner that positions of video frames corresponding to reference compressed video data and time points of distribution of the reference compressed video data are different to each other, the reference compressed video data being data, in time series data generated by compressing a video signal, for which decoding of a subsequent video signal can be started without depending on previous data, receiving a distribution request for video/audio content transmitted from an information processing apparatus which reproduces the video/audio content, selecting compressed data streams to be distributed to the information processing apparatus among the multiple compressed data streams corresponding to the video/audio content related to the distribution request, using a distribution time point of the reference compressed video data detected in the step of detecting the time point of distribution of the reference compressed video data, and switching the compressed data streams to be distributed to the information processing apparatus that transmitted the distribution request into the compressed data stream selected by the step of selecting the compressed data streams.

According to another embodiment of the present invention, there is provided an information processing method including the steps of requesting a network device that performs a process of switching multiple compressed data streams generated from single video/audio content in such a manner that positions of video frames corresponding to reference compressed video data and time points of distribution of the reference compressed video data are different to each other, the reference compressed video data being data, in time series data generated by compressing a video signal, for which decoding of a subsequent video signal can be started without depending on previous data, for a distribution of all the multiple compressed data streams corresponding to the video/audio content necessary to be acquired, and acquiring the compressed data streams corresponding to the video/audio content that is distributed from the network device.

According to another embodiment of the present invention, there is provided a program causing a computer to realize the functions of a stream analysis section for analyzing each of multiple compressed data streams that are generated from single video/audio content in such a manner that positions of video frames corresponding to reference compressed video data and time points of distribution of the reference compressed video data are different to each other, the reference compressed video data being data, in time series data generated by compressing a video signal, for which decoding of a subsequent video signal can be started without depending on previous data, to detect a latest time point of distribution of the reference compressed video data, a distribution request processing section for receiving a distribution request for video/audio content transmitted from an information processing apparatus which reproduces the video/audio content as well as using a distribution time point of the reference compressed video data that is detected by the stream analysis section, to select a compressed data stream to be distributed to the information processing apparatus among the multiple compressed data streams corresponding to the video/audio content related to the distribution request, and a distribution switching section for switching the compressed data streams to be distributed to the information processing apparatus that transmitted the distribution request into the compressed data stream selected by the distribution request processing section.

According to another embodiment of the present invention, there is provided a program causing a computer to realize the function of a content acquisition section that requests a network device that performs a process of switching multiple compressed data streams generated from single video/audio content in such a manner that positions of video frames corresponding to reference compressed video data and time points of distribution of the reference compressed video data are different to each other, the reference compressed video data being data, in time series data generated by compressing a video signal, for which decoding of a subsequent video signal can be started without depending on previous data, for a distribution of all the multiple compressed data streams corresponding to the video/audio content necessary to be acquired, and that acquires the video/audio content from the network device.

As described above, according to embodiments of the present invention, it is possible to provide a content distribution system including a content server including multiple encoders for encoding video/audio content in such a manner that positions of video frames corresponding to reference compressed video data and time points of distribution of the reference compressed video data are different to each other, the reference compressed video data being data, in time series data generated by compressing a video signal, for which decoding of a subsequent video signal can be started without depending on previous data, and that generates multiple compressed data streams from the single video/audio content, an information processing apparatus for reproducing the compressed data streams that are corresponding to the multiple distributed video/audio content and that are to be distributed by the content server, and a network device for distributing the multiple compressed data streams distributed by the one or multiple content servers to the information processing apparatus desired for a distribution of the compressed data streams. The network device may include a stream analysis section for detecting a latest time point of distribution of the reference compressed video data after analyzing the multiple compressed data streams distributed by the one or multiple content servers, a distribution request processing section for receiving a distribution request for video/audio content transmitted from an information processing apparatus as well as using a distribution time point of the reference compressed video data that is detected by the stream analysis section, to select a compressed data stream to be distributed to the information processing apparatus among the multiple compressed data streams corresponding to the video/audio content related to the distribution request, and a distribution switching section for switching the compressed data streams to be distributed to the information processing apparatus that transmitted the distribution request into the compressed data stream selected by the distribution request processing section. The information processing apparatus may request the network device for a distribution of all the multiple compressed data streams corresponding to the video/audio content necessary to be acquired, and includes a content acquisition section for acquiring the video/audio content from the network device.

According to the embodiments of the present invention described above, speeding up of channel switching in an IPTV system can be realized by a simple method without drastically changing the reproduction system of an existing network device or terminal.

Embodiments of the invention will now be described with reference to the accompanying drawings, throughout which like parts are referred to by like references, and in which:
FIG. 1 is an explanatory diagram for illustrating a content distribution system according to a first embodiment of the present invention;
FIG. 2 is a block diagram for illustrating a configuration of a content server according to the embodiment;
FIG. 3 is a block diagram for illustrating a configuration of an information processing apparatus according to the embodiment;
FIG. 4 is a block diagram for illustrating a configuration of a switch according to the embodiment;
FIG. 5 is an explanatory diagram for illustrating a positional relationship between IDR pictures in MPEG2-TS streams that are outputted from the content server according to the present embodiment;
FIG. 6 is an explanatory diagram for illustrating a format of UDP packets to be transmitted from the content server according to the embodiment;
FIG. 7 is an explanatory diagram for illustrating a data format of Broadcast Discovery Record according to DVB-IP;
FIG. 8 is an explanatory diagram for illustrating an example where the Broadcast Discovery Record is expressed in XML;
FIG. 9 is a flow chart for illustrating an information processing method according to the embodiment;
FIG. 10A is an explanatory diagram for illustrating a format of an IGMP message according to the embodiment;
FIG. 10B is an explanatory diagram for illustrating a format of an IGMP message according to the embodiment;
FIG. 11A is an explanatory diagram for illustrating an example of the IGMP message according to the embodiment;
FIG. 11B is an explanatory diagram for illustrating an example of the IGMP message according to the embodiment;
FIG. 12 is a flow chart for illustrating a channel selection process according to the present embodiment;
FIG. 13A is an explanatory diagram for illustrating an example of the IGMP message according to the embodiment;
   FIG. 13B is an explanatory diagram for illustrating an example of the IGMP message according to the embodiment;
   FIG. 13C is an explanatory diagram for illustrating an example of the IGMP message according to the embodiment;
   FIG. 14 is a flow chart for illustrating a process of channel reception termination according to the embodiment;
   FIG. 15 is a flow chart for illustrating a stream switching process according to the embodiment;
   FIG. 16 is an explanatory diagram for illustrating a stream switching process according to the embodiment;
   FIG. 17 is an explanatory diagram for illustrating a stream switching process according to the embodiment;
   FIG. 18 is a block diagram for illustrating a hardware configuration of the content server, the information processing apparatus and the switch according to the embodiment; and
   FIG. 19 is an explanatory diagram for illustrating a general IPTV system.

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

The explanation will be described hereinafter in the following order:
(1) Explanation on the infrastructure technology
(2) First embodiment
   (2-1) Content distribution system
   (2-2) Content server
   (2-3) Information processing apparatus
   (2-4) Switch
   (2-5) Content distribution method
   (2-6) Information processing method
   (2-7) Stream switching method
(3) Hardware configuration of the content server, the information processing apparatus and the switch according to the embodiment of the present invention
(4) Summary

### (Explanation on the infrastructure technology)

First, before giving a detailed description of the preferred embodiments according to the present invention, technological matters laying a basis for realizing the present embodiments will be described. Incidentally, the present embodiments are configured to obtain more significant effects by improving on the infrastructure technology described below. Accordingly, the technology relating to the improvement forms the characteristics of the present embodiments. That is, although the present embodiments follow the basic concept of the technological matters described herein, it is to be noted that the substance of the present embodiments is aggregated in the improvements, and thus, the configuration and effect thereof are clearly different from those of the infrastructure technology.

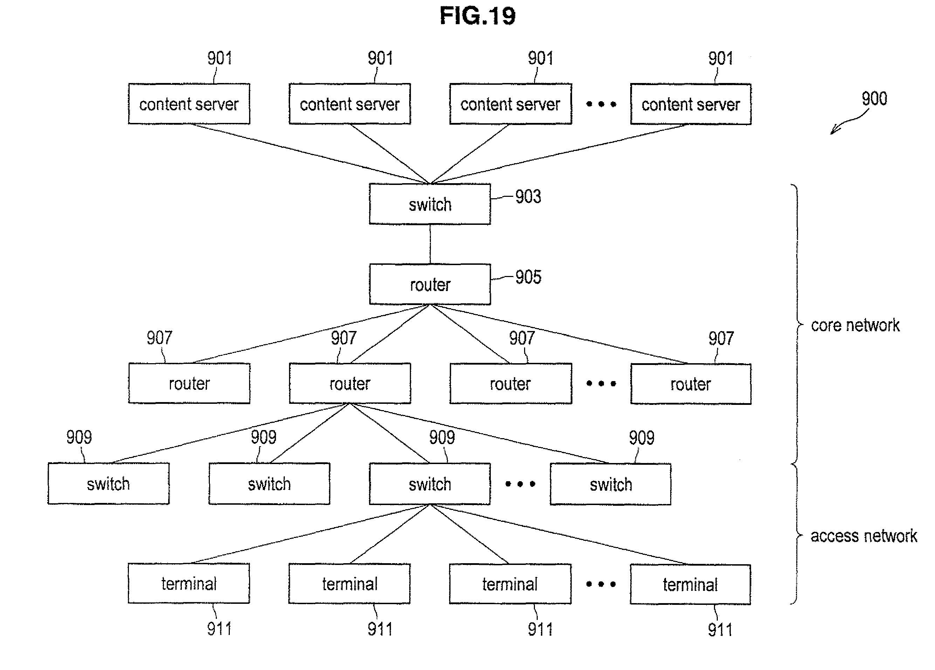

FIG. 19 is a network configuration diagram relating to a multicast video distribution in a general IPTV system 900. As shown in FIG. 19, the general IPTV system 900 mainly includes, for example, a plurality of content servers 901 corresponding to respective channels, edge switches 903 and 909, routers 905 and 907, and a plurality of terminals 911 to be used by viewers.

The content server 901 is configured from an encoder for encoding a video/audio signal (video/audio content) and a distribution server. A video signal of each TV channel (300 channels in total, for example), is encoded in real time by using, for example, H.264/AVC. An audio signal of each TV channel is encoded in real time by using a high-efficiency coding technique such as High-efficiency Advanced Audio Coding (HE-AAC). Then, after multiplexing each of the encoded signals to an MPEG-transport Stream (MPEG2-TS) format, the encoder transmits the same as stream data to the distribution server. The distribution server inserts the multiple MPEG2-TS packets in a Real-time Transport Protocol (RTP) packet format. Then, after that, the distribution server multicasts the same to an IP network by a transmission protocol of User Datagram Protocol (UDP).

The IP packet of the stream of each channel is specified an individual multicast address, and is distributed to the terminal 911 via a core network and an access network. As the core network, a wide bandwidth network that uses optical fibre and that is capable of data transmission at several gigabits to several tens of gigabits per second by using a technology such as a Wavelength Division Multiplexing (WDM) is used. On the other hand, a technology such as Asymmetric Digital Subscriber Line (ADSL) using copper wires of existing analog telephone line, for example, is used for the access network to an IPTV service subscriber's premise (that is, from the edge switch 909 to the terminal 911). There are various standards for ADSL, and the data bandwidth also depends on the length of the line. If, for example, the ADSL2 standard is used, when within 4km from a base station, a bandwidth of 10 or more megabits per second can be realized and at least one video signal at a resolution of high definition television can be distributed.

As described above, the core network having a sufficient bandwidth and capable of distributing the streams of all the channels provided by the IPTV service. On the contrary, the access network has a limited data bandwidth, and the access network has to be distributed only the data of the channels being received by the terminal. Generally, Internet Group Management Protocol (IGMP) is used for the distribution control of the multicast data.

When the terminal 911 transmits an IGMP message to the network to join a multicast group of data of a channel desired to be received, the edge router 907 distributes the multicast data only to the network to which the request has been made. However, when a plurality of terminals is connected to the edge router 907, the edge router 907 distributes the data also to the access network to which the terminal 911 not receiving the corresponding multicast data is connected. Thus, it is necessary to prevent the distribution to the access network to which the terminal 911 not requesting to join the multicast group by IGMP is connected. Accordingly, a Digital Subscriber Line Access Multiplexer (DSALM), which is the edge switch 909, is implemented with IGMP SNOOPING. The DSLAM snoops the IGMP packet transmitted from the terminal 911, and performs a filtering control so that the data of the multicast group is distributed only to the access network to which the terminal 911 that issued the request is connected.

The IPTV system according to each embodiment of the present invention has been achieved by following the IPTV system of a general architecture as described above. Each embodiment of the present invention will be described below in detail.

### (First embodiment)

### <Content distribution system>

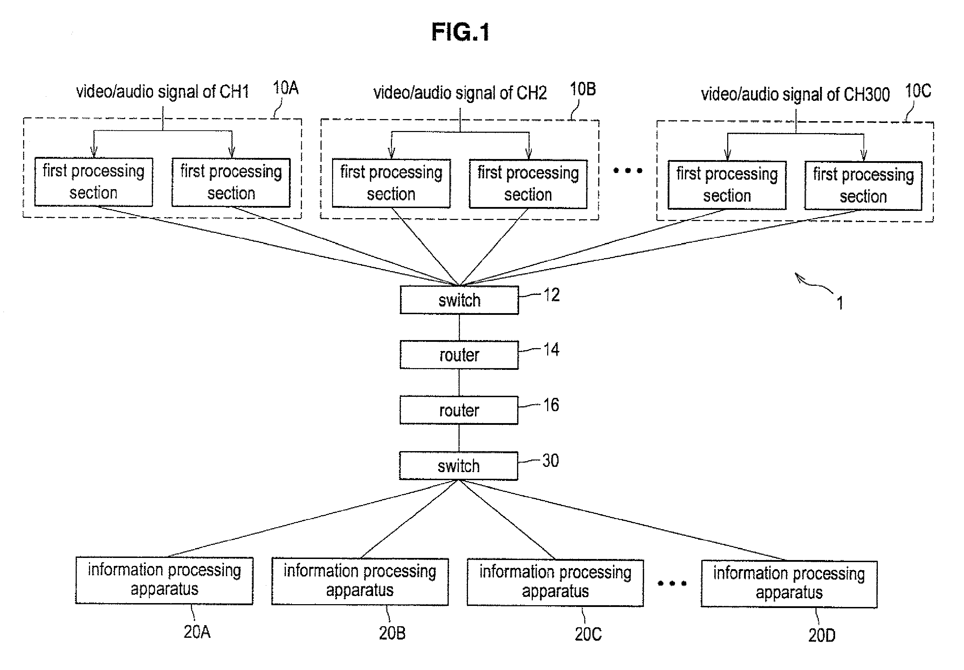

First, referring to FIG. 1, a content distribution system according to a first embodiment of the present invention will be described in detail. FIG. 1 is an explanatory diagram for describing the content distribution system according to the present embodiment. Incidentally, in the following explanation, an explanation will be made with an IPTV system as an example of the content distribution system.

As shown in FIG. 1, for example, a content distribution system 1 according to the present embodiment mainly includes a plurality of content servers 10A, 10B and 10C corresponding to respective channels, switches 12 and 30, routers 14 and 16, a plurality of information processing apparatuses 20A, 20B, 20C and 20D to be used by viewers.

The content server 10 corresponds to the broadcasting station of each channel in the IPTV system, and encodes a video/audio content (video/audio signal) according to a predetermined method to make it a compressed data stream and multicast the same to an IP network by using a predetermined transmission protocol. In FIG. 1, only three content servers are shown. However, the content server 10 exists as many as the number of channels in the IPTV system, for example, and where there are 300 channels in total, there are 300 content servers 10 in the content distribution system 1.

The switch 12 is a communication device having an exchanging function (switching function) for a packet flowing through the core network, and the switch 30 is a communication device having an exchanging function for a packet flowing through the access network and is particularly called an edge switch because it exists in the vicinity of the core network. These switches 12 and 30 are set so as to determine the destination of a packet and relay the communication only to a specific third party.

The routers 14 and 16 are devices for relaying data such as a packet flowing through the network. These routers analyze a partial protocol, that is, the network layer or the transport layer of the so-called OSI reference model, and transfer the data. Further, the routers 14 and 16 have a path selection function of analyzing the address described in the network layer and determining through which path the data is to be transferred.

The information processing apparatus 20 is a terminal to be used by the viewer of the content distribution system 1, and acquires a content desired to be viewed and listened to among multiple video/audio contents distributed by respective content servers 10 and reproduces the acquired content.

Incidentally, the content server 10, the information processing apparatus 20 and the switch 30 described above will be described again in detail in the following.

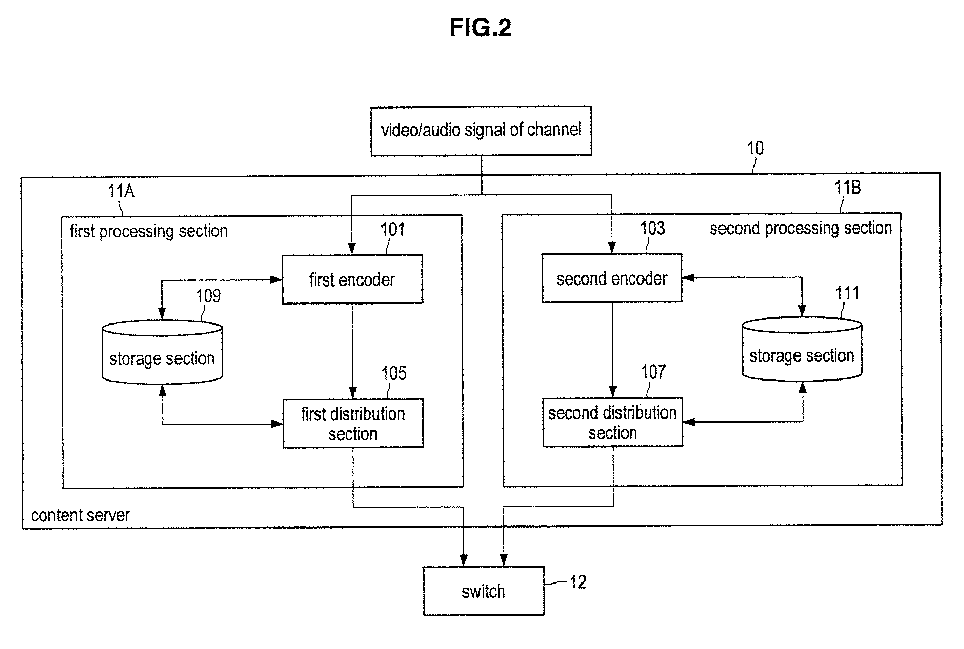

Heretofore, the content distribution system 1 according to the present embodiment has been described. Next, referring to FIGS. 2 to 4, the content server 10, the information processing apparatus 20 and the switch 30 according to the present embodiment will be described in detail.

### <Content server>

Next, referring to FIG. 2, the configuration of the content server 10 according to the present embodiment will be described in detail. FIG. 2 is a block diagram for describing the configuration of the content server 10 according to the present embodiment.

As shown in FIG. 2, for example, the content server 10 according to the present embodiment includes a first processing section 11A and a second processing section 11B. A video/audio signal of a same channel is input to the first processing section 11A and the second processing section 11B, respectively.

As shown in FIG. 2, the first processing section 11A mainly includes a first encoder 101, a first distribution section 105 and a storage section 109, for example. Further, as shown in FIG. 2, the second processing section 11B mainly includes a second encoder 103, a second distribution section 107 and a storage section 111, for example.

As shown in FIG. 2, the first processing section 11A and the second processing section 11B are processing sections including at least one set of an encoder and a distribution section where each of the encoders and each of the distribution sections function independent of each other.

The first encoder 101 and the second encoder 103 can be realized by a central processing unit (CPU), a read only memory (ROM) and a random access memory, for example. Of the inputted video/audio signal, the first encoder 101 and the second encoder 103 encode the video signal in real time by using, for example, H.264/AVC, and also, encode the audio signal in real time by using a high-efficiency coding technique such as HE-AAC or the like. Subsequently, after multiplexing each of the encoded signals to an MPEG2-TS format, the first encoder 101 and the second encoder 103 transmit the same as compressed data streams to the first distribution section 105 and the second distribution section 107.

Here, the first encoder 101 and the second encoder 103 respectively encode the video signal of the video/audio signal in such a manner that the positions of a video frame (normally, 30 frames per second) or a field (60 fields per second) of an original video signal to which reference compressed data corresponds are different from each other. Here, reference compressed video data is reference compressed video data that can be decoded without referring to reference compressed video data temporally preceding the reference compressed video data. The first encoder 101 and the second encoder 103 perform the encoding so that the reference compressed video data appear periodically so as to enable the encoding from the middle of the compressed data stream. Example of the reference compressed video data includes, for example, an instantaneous decoder refresh (IDR) picture in H.264/AVC or an Intra picture (I picture) in MPEG2 video.

For example, a case is assumed where a high definition video is encoded by H.264/AVC. At this time, the first encoder 101 and the second encoder 103 encode the video signal so that the encoded signal is configured from 30 MPEG pictures per second and an IDR picture appears once per second. By performing the encoding process, even if the bit rate of the video is maximum 7 megabits per second, the reproduced video is of a higher image quality than when encoding is performed so that the IDR picture appears twice per second. Incidentally, in this specification, according to the description of the Group of Picture (GOP) of the MPEG2 video, a group of multiple pictures including the IDR picture at the beginning will be expressed as GOP.

The first encoder 101 and the second encoder 103 respectively encode the video/audio signal in such a manner that the conditions of other than the timing of appearance of the reference compressed video data are the same. For example, the first encoder 101 and the second encoder 103 encode a same video signal by the same number of MPEG pictures and resolution. Further, an MPEG stream to be outputted from each of the encoders 101 and 103 are outputted in such a manner that it becomes maximum 8 megabits per second at the time of being multiplexed to MPEG2-TS. In this case, the IDR pictures in the two MPEG2-TSs appear every one second (that is, GOP length is 30 frames) where the first encoder 101 and the second encoder 103 are set so that the IDR pictures are generated shifting from each other by 0.5 seconds (that is, 15 pictures).

Incidentally, at the time of encoding the video/audio signal, the first encoder 101 and the second encoder 103 can respectively refer to various databases stored in the storage section 109 and the storage section 111 described later. Further, the first encoder 101 and the second encoder 103 may also respectively store the generated compressed data stream in the storage section 109 and the storage section 111.

The first distribution section 105 and the second distribution section 107 can be realized by a CPU, a ROM, a RAM, a communication device, and the like, for example, and have the function of a so-called Real-time Transport Protocol (RTP) server. The first distribution section 105 and the second distribution section 107 respectively store the MPEG2-TS packets generated by the first encoder 101 and the second encoder 103 in IP multicast packets after storing them in the RTP packets and in the UDP packets, and transmit the same. These IP packets are distributed by the IP network via the switch 12 or the like, for example.

The storage section 109 is stored as appropriate various parameters which became necessary to be preserved at the time of the first processing section 11A according to present embodiment performing a process, the progress of the process, or the like, or various databases or the like. The first encoder 101, the first distribution section 105, and the like, can freely read from or write in the storage section 109.

In the same manner, the storage section 111 is stored as appropriate various parameters which became necessary to be preserved at the time of the second processing section 11B according to present embodiment performing a process, the progress of the process, or the like, or various databases or the like. The second encoder 103, the second distribution section 107, and the like, can freely read from or write in the storage section 111.

Incidentally, in the example shown in FIG. 2, a case is described where the content server 10 according to the present embodiment is configured from two processing sections, namely, the first processing section 11A and the second processing section 11B. However, the content server 10 can be configured from 3 or more processing sections. The greater the number of the processing sections assigned to one channel (one video/audio signal, in other words), the faster the channel switching can be.

Further, the first processing section 11A and the second processing section 11B may be provided within the case of one content server. Further, a processing section including an encoder and a distribution section may be an independent device, and a plurality of the devices may be connected in parallel.

Heretofore, an example of the function of the content server 10 according to the present embodiment has been shown. Each of the above-described components may be configured by using a general-purpose member or circuit, or may be configured by using specialized hardware for the function of each component. Further, a CPU or the like may perform all of the functions of the components. It is thereby possible to change the hardware configuration to be used as necessary according to the technique level when carrying out the present embodiment.

Note that it is possible to create a computer program to realize each function of the content server according to the above embodiment and to implement the program to a personal computer or the like. Further, a recording medium that stores such computer program and that can be read by the computer can also be provided. The recording medium is, for example, a magnetic disk, an optical disk, a magneto-optical disk, a flash memory, or the like. Further, the above-described computer program can be distributed via a network, for example, without using a recording medium.

### <Configuration of the information processing apparatus>

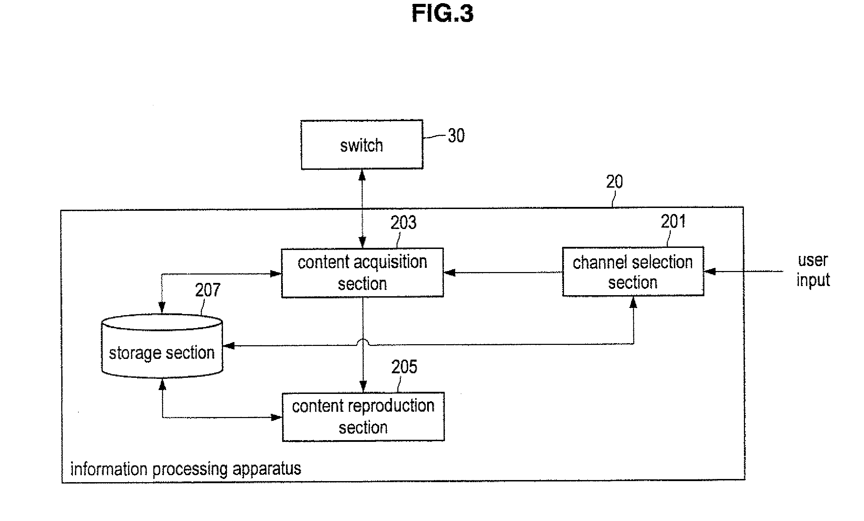

Subsequently, referring to FIG. 3, a configuration of the information processing apparatus 20 according to the present embodiment will be described in detail. FIG. 3 is a block diagram for describing a configuration of the information processing apparatus 20 according to the present embodiment.

As shown in FIG. 3, for example, the information processing apparatus 20 according to the present embodiment mainly includes a channel selection section 201, a content acquisition section 203, a content reproduction section 205, and a storage section 207.

The channel selection section 201 is realized by a CPU, a ROM, a RAM, and the like, for example. When a user selects a specific channel among multiple channels being distributed by operating an operation section, such as a channel selection switch, a channel selection button or the like provided on the information processing apparatus 20, or a remote control, or the like, the channel selection section 201 converts the input by the channel selection switch, the channel selection button or the like into a predetermined signal. Further, the channel selection section 201 outputs the predetermined signal acquired by converting the user input to the content acquisition section 203 described later.

The content acquisition section 203 is realized by a CPU, a ROM, a RAM, a communication device, and the like, for example, and acquires a content distributed in a channel corresponding to the signal transmitted from the channel selection section 201 among multiple channels being distributed. In the content distribution system according to the present embodiment, multiple compressed data streams are distributed for contents belonging to one channel. Therefore, the content acquisition section 203 requests the later-described switch 30 to distribute all the compressed data streams corresponding to the channel selected by the user.

The switch 30 selects a stream to be distributed to the information processing apparatus 20 that has requested for distribution among the multiple compressed data streams corresponding to the channel based on the distribution request for streams transmitted by the content acquisition section 203, and distributes the streams to the information processing apparatus 20. The switch 30 selects the most optimal compressed data streams aiming for shortening the channel switching time when to select the stream to be distributed among the multiple compressed data streams. Such selection of stream will be described in detail in the following.

The content acquisition section 203 can acquire content by acquiring the compressed data streams distributed from the switch 30. The content acquisition section 203 transmits the acquired content (more specifically, the compressed data stream corresponding to the content) to the later-described content reproduction section 205.

Incidentally, at the time of acquiring the content, the content acquisition section 203 can execute the acquisition process for the content by referring to various databases or the like stored in the storage section 207 described later.

The content reproduction section 205 is realized by a CPU, a ROM, a RAM, and the like, for example, and reproduces the content acquired by the content acquisition section 203 and displays the same on a display (not shown) provided in the information processing apparatus 20. Here, the reproduction of a content includes reproducing a decoded content after the compressed data stream transmitted from the content acquisition section 203 is decoded, and reproducing a content along with the decoding of the compressed data stream. The content reproduction section 205 can refer to the databases or the like stored in the storage section 207 described later at the time of decoding the content or reproducing the content.

The storage section 207 is stored as appropriate various parameters which became necessary to be preserved at the time of the information processing apparatus 20 according to present embodiment performing a process, the progress of the process, or the like, or various databases or the like. The channel selection section 201, the content acquisition section 203, the content reproduction section 205, and the like, can freely read from or write in the storage section 207.

Heretofore, an example of the function of the information processing apparatus 20 according to the present embodiment has been shown. Each of the above-described components may be configured by using a general-purpose member or circuit, or may be configured by using specialized hardware for the function of each component. Further, a CPU or the like may perform all of the functions of the components. It is thereby possible to change the hardware configuration to be used as necessary according to the technique level when carrying out the present embodiment.

Note that it is possible to create a computer program to realize each function of the information processing apparatus according to the above embodiment and to implement the program to a personal computer or the like. Further, a recording medium that stores such computer program and that can be read by the computer can also be provided. The recording medium is, for example, a magnetic disk, an optical disk, a magneto-optical disk, a flash memory, or the like. Further, the above-described computer program can be distributed via a network, for example, without using a recording medium.

### <Configuration of the switch>

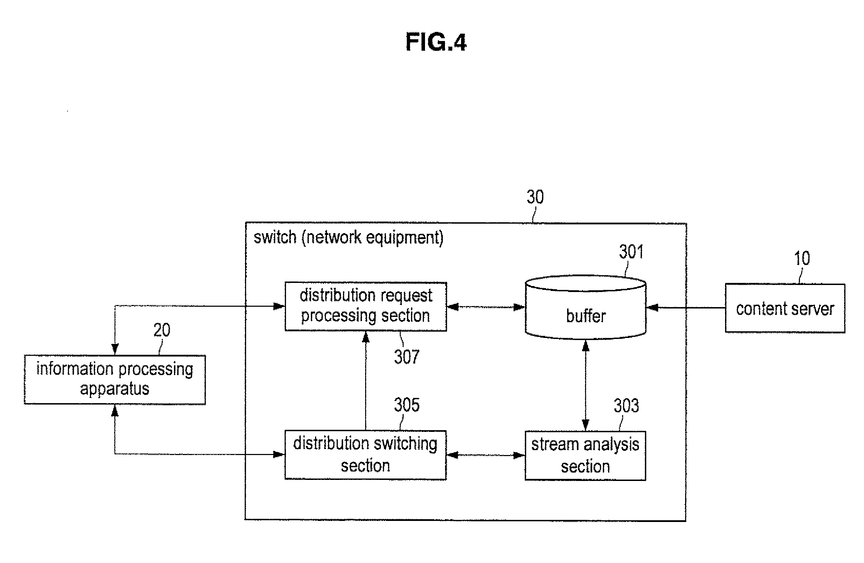

Subsequently, referring to FIG. 4, a configuration of the switch 30 that is an example of the network device according to the present embodiment will be described in detail. FIG. 4 is a block diagram for describing a configuration of the switch 30 according to the present embodiment.

As described above, all the multiple compressed data streams of all the channels distributed in the content distribution system 1 are distributed to the switch 30. Analyzing those multiple compressed data streams, the switch 30 determines whether the IDR picture is started from UDP packets which the switch 30 is currently receiving, so as to distribute the most optimal stream to the information processing apparatus 20. This analysis of the compressed data streams is performed by analyzing MPEG-TS packets. A system header of the MPEG-TS is to be placed before an appearance of the IDR picture according to the DVB-IP standard, or the like, therefore, the switch 30 can perform more easily a process of analyzing streams by detecting the system header.

The switch 30 according to the present embodiment mainly includes, as shown in FIG. 4 for example, a buffer 301, a stream analysis section 303, a distribution request processing section 305 and a distribution switching section 307.

The buffer 301 stores temporally a part of all the compressed data streams (more specifically, IP packets) of all channels distributed in the content distribution system 1. The compressed data streams stored temporally in the buffer 301 is then to be transmitted to the later-described distribution switching section 307. Moreover, this part of the compressed data streams stored temporally in the buffer 301 will be used for the process of analyzing streams in the later-described stream analysis section 303.

For example, here is a case where the IDR pictures are shifted by 30 frames.

Generally, if a distribution is requested by the IGMP while buffering data from the IP packet where the IDR picture exists to the IP packet immediately before the next IDR picture, it is possible to distribute the IDR picture. In the present embodiment, the GOP in two streams of the channel is shifted by a half of the GOP (for 15 frames). Further, since the switch needs only to distribute any stream data to the terminal, it may be considered that a size of 15 frames is enough for the buffer. If the stream is 8M bps for example, a buffer of 0.5M byte per stream, that is, a buffer of 1M byte per channel is necessary. Therefore, if the above buffer size is secured for all channels in the content distribution system, the overall buffer size will be huge and not undesirable. Further, when performed such buffering, there is a possibility that the buffering will cause a distribution delay.

Therefore, the switch 30 according to the present embodiment performs the following process of analyzing streams in the later-described stream analysis section 303 in order to prevent the delay due to the buffering. This enables a buffer size per stream to be reduced to a quantity (for approximately several 10 milliseconds, for example) for which the compressed data streams for the delay time necessary for a switching process by the later-described distribution switching section 307 can be temporally stored. Moreover, depending on a kind of process of analyzing streams, it is also possible to realize a switching stream having no distribution delay without the buffer 301 as described later.

The stream analysis section 303 is realized by a CPU, ROM, a RAM and the like, for example. The stream analysis section 303 analyzes each of the multiple compressed data streams to be distributed to the switch 30, detects the latest time point when the reference compressed video data (an IDR picture, for example) has been distributed, and stores the detected latest distribution time point. Moreover, when the later-described distribution request processing section 305 inquires about the latest distribution time point regarding to a certain channel, the stream analysis section 303 outputs the distribution time point of the corresponding channel that is stored at the time point to the distribution request processing section 305. This process of analyzing streams is performed by analyzing the MPEG-TS packets as described above.

The distribution request processing section 305 is realized by a CPU, ROM, a RAM and the like, for example. The distribution request processing section 305 receives a distribution request for video/audio content transmitted from the information processing apparatus 20. Moreover, using the latest distribution time point detected by the stream analysis section 303, the distribution request processing section 305 selects compressed data streams to be distributed to the information processing apparatus 20 among the multiple compressed data streams corresponding to the video/audio content related to the distribution request. In other words, having an IGMP snooping function, the distribution request processing section 305 receives IGMP packets transmitted from the information processing apparatus 20, and controls so that the selected compressed data streams is to be distributed only to the information processing apparatus that has transmitted the IGMP packets.

Here is a case where IP packets arrived in the switch 30 is determined to include System Header by the stream analysis section 303. Even though the streams determined to include the System Header is immediately distributed to the information processing apparatus 20, time elapses during a switching process, and the streams after switching does not include an IDR picture at a time when the switching is completed. Therefore, such switching process is not appropriate for a channel switching.

Consequently, when received the distribution request from the information processing apparatus 20, the distribution request processing section 305 inquires the stream analysis section 303 about the latest distribution time point that is stored for each of the compressed data streams corresponding to the channels listed in the distribution request. Then, the distribution request processing section 303 preferentially selects compressed data streams corresponding to the oldest distribution time point among the multiple distribution time points obtained as the result of the inquiry as compressed data streams to be transmitted to the information processing apparatus 20. This enables the distribution request processing section 305 to select the first compressed data stream to which the reference compressed video data will be distributed next. The switch 30 can distribute a stream to which an IDR picture will be transmitted in the shortest time, by immediately transmitting IP packets of the compressed data streams selected by the distribution request processing section 305

Note that the distribution request processing section 305 may select streams by further considering not only how old the distribution time point is (that is a relative position of the distribution time point) but also an interval from the reference compressed video data to the next reference compressed video data (that is GOP). When performing such process, the distribution request processing section 305 is assumed to hold, in advance, information regarding time interval from when the reference compressed video data has been distributed to when the next reference compressed video data is distributed. When acquired information regarding the latest distribution time point from the stream analysis section 303, the distribution request processing section 305 determines around where the time point of requesting for distribution locates at in the above time interval for each stream using the information regarding the time interval. As the result, the distribution request processing section 305 can predicts the time point when the reference compressed video data will be distributed next for each stream. The distribution request processing section 305 selects a stream corresponding to the distribution time point that will arrive first, among the predicted distribution time points, as a compressed data stream to be distributed to the information processing apparatus 20. The distribution request processing section 305 outputs the selected stream and a scheduled distribution time point of the reference compressed video data in the stream to the later-described distribution switching section 307. The later-described distribution switching section 307 can switch streams without delay by switching streams at the scheduled distribution time point that is transmitted. When the distribution request processing section 305 performs the process of selecting streams accompanied by such the process of predicting, it can omit an implementation of the buffer 301.

The stream analysis section 303 may further store not only the latest distribution time point but also some of the distribution time points prior to the latest distribution time point, and the distribution request processing section 305 may predict the next distribution time point using those some of the distribution time points.

The distribution switching section 307 is realized by a CPU, a ROM, a RAM and the like, for example. The distribution switching section 307 performs a process of switching the compressed data streams distributed to the information processing apparatus 20 which has transmitted the distribution request to the compressed data streams selected by the distribution request processing section 305. When the buffer 301 is arranged to the switch 30, while distributing the compressed data streams after switching that is stored in the buffer 301 to the information processing apparatus 20, the distribution switching section 307 performs the process of switching compressed data streams. Moreover, when the scheduled distribution time point of the reference compressed video data has been input from the distribution request processing section 305, the distribution switching section 307 performs a process of switching streams so as to complete the switching by the time point.

Performing a process of switching the compressed data streams by the distribution switching section 307 renders the optimal compressed data stream of the video/audio content listed in the distribution request to be distributed to the information processing apparatus 20.

Heretofore, an example of the function of the switch (network device) 30 according to the present embodiment has been shown. Each of the above-described components may be configured by using a general-purpose member or circuit, or may be configured by using specialized hardware for the function of each component. Further, a CPU or the like may perform all of the functions of the components. It is thereby possible to change the hardware configuration to be used as necessary according to the technique level when carrying out the present embodiment.

Note that it is possible to create a computer program to realize each function of the network device according to the above embodiment and to implement the program to a personal computer or the like. Further, a recording medium that stores such computer program and that can be read by the computer can also be provided. The recording medium is, for example, a magnetic disk, an optical disk, a magneto-optical disk, a flash memory, or the like. Further, the above-described computer program can be distributed via a network, for example, without using a recording medium.

### <Content distribution method>

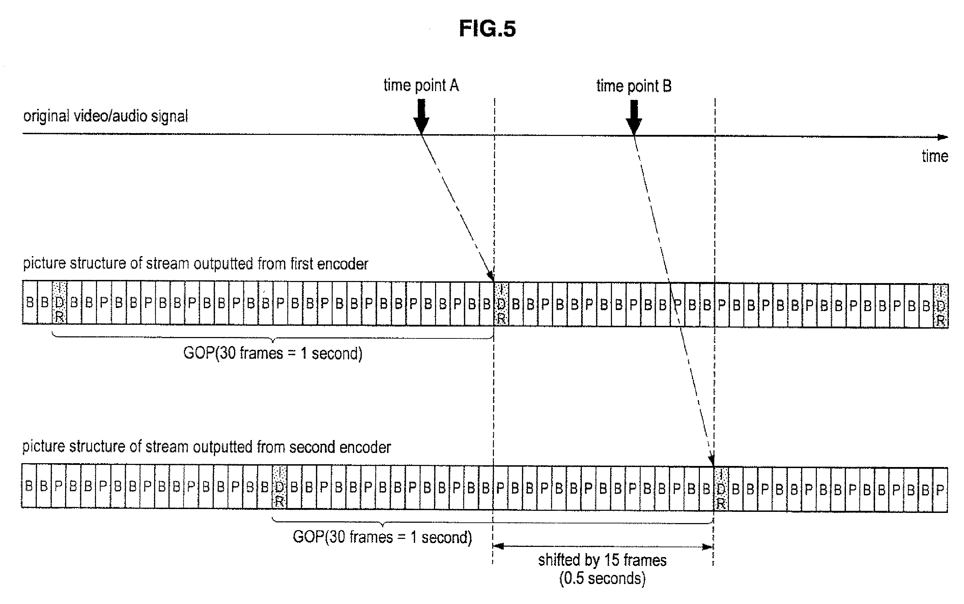

Subsequently, referring to FIGS. 5 to 8, a content distribution method to be executed by the content server 10 according to the present embodiment will be described in detail.

### [Positional relationship of the reference compressed video data]

FIG. 5 is an explanatory diagram for describing the positional relationship between the IDR pictures in MPEG2-TS streams that are outputted from the content server 10 according to the present embodiment. In FIG. 5, an example is shown where the encoding is performed so that the IDR picture, which is the reference compressed video data, appears once per second. However, an encoding method that flexibly changes the generation timing of the IDR picture may also be adopted. In this case, the encoders operate in coordination so that the timings of appearance of the IDR pictures are shifted from each other.

In FIG. 5, encoding is executed so that the IDR picture, which is the reference compressed video data, appears one per second as described above. Further, the GOP is configured from 30 frames, and besides the IDR picture, a predictive picture (P-picture) and a bi-predictive picture (B-picture) exist in the GOP. As is apparent from FIG. 5, when comparing a stream outputted from the first encoder 101 and a stream outputted from the second encoder 103, it can be seen that the timings of appearance of the IDR pictures are shifted by 15 frames (about 0.5 seconds).

By performing the encoding in such a manner, and also, by the information processing apparatus 20, which is a terminal, receiving an MPEG2- TS stream that is optimum then at the time of channel switching, the waiting time from after switching until the IDR picture is received can be made minimum, and the video of the channel after switching can be swiftly displayed.

For example, here is a case where the switching to the channel is performed in the information processing apparatus 20, which is a terminal, at "time point A" shown in FIG. 5. In this case, the information processing apparatus 20 can shorten the waiting time from after the channel switching until the displaying of the video of the selected channel by receiving the stream outputted from the first encoder 101 (in other words, the stream outputted from the first processing section 11 A). In the same manner, there is another case where the switching to the channel is performed in the information processing apparatus 20 at "time point B". In this case, the information processing apparatus 20 can shorten the waiting time from after the channel switching until the displaying of the video of the selected channel by receiving the stream outputted from the second encoder 103 (in other words, the stream outputted from the second processing section 11B).

The MPEG streams outputted from the respective encoders 101 and 103 are generated from a same video signal. These MPEG streams only have the temporal positions of the IDR pictures, from which the displaying of the video can be started based on the channel switching or the like, shifted from each other, and the resolution, maximum bit rate or the like are to be encoded in the same condition. Accordingly, the user is hardly conscious of which of the streams transmitted from the encoders is being reproduced.

Further, there is no need that an H.264/264 encoder and an MPEG2 system clock for multiplexing are synchronized with each other for each of the encoders 101 and 103. If information necessary for shifting the relative positions of the IDR pictures is arranged beforehand, each of the encoders 101 and 103 can realize the encoding without performing a communication between the processing sections 11A and 11B. Here, the information necessary for shifting the relative positions of the IDR pictures may be information relating to a fixed GOP length, information relating to which frame of the video frame of the original video signal is to be encoded to the IDR picture, or the like. Further, in a case of adopting variable GOP length, the processing sections 11A and 11B can also communicate with each other and shift the appearance positions so that the frames in which the IDR pictures appear become optimal for the channel switching.

### [Format of UDP Packet]

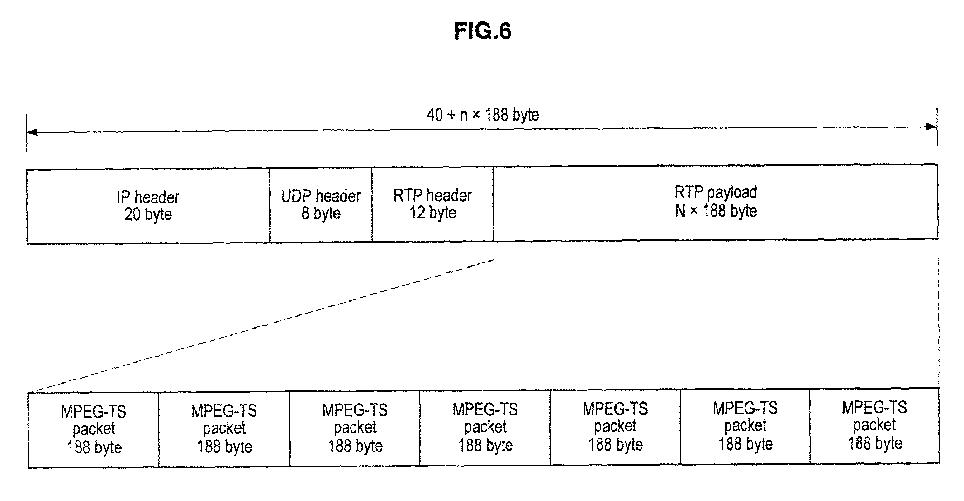

FIG. 6 is an explanatory diagram for describing a format of UDP packets to be transmitted from the distribution sections 105 and 107 according to the present embodiment. The MPEG2-TS packet generated by each of the encoders 101 and 103 provided in the content server 10 is outputted to the distribution section provided in the processing section to which each of the encoders belongs and is transmitted as an IP packet. The IP packet has a format as shown in FIG. 6, for example.

As shown in FIG. 6, the UDP packet of the IP multicast is configured from an IP header, a UDP header, a RTP header and a RTP payload. The MPEG2-TS packet generated by each of the encoders 101 and 103 of the content server 10 is stored in the RTP payload. Normally, as shown in FIG. 6, seven MPEG2-TS packets are stored in the RTP payload.

Each of the distribution sections 105 and 107 of the content server 10 generates the UDP packet as shown in FIG. 6 and multicasts the same.

### [Transmission of IP Packet]

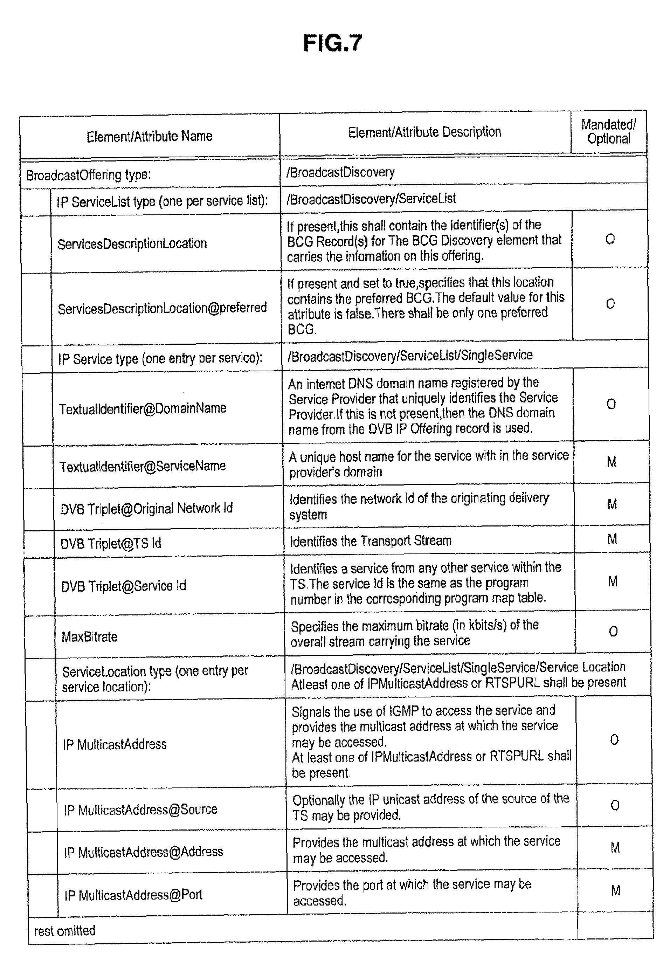

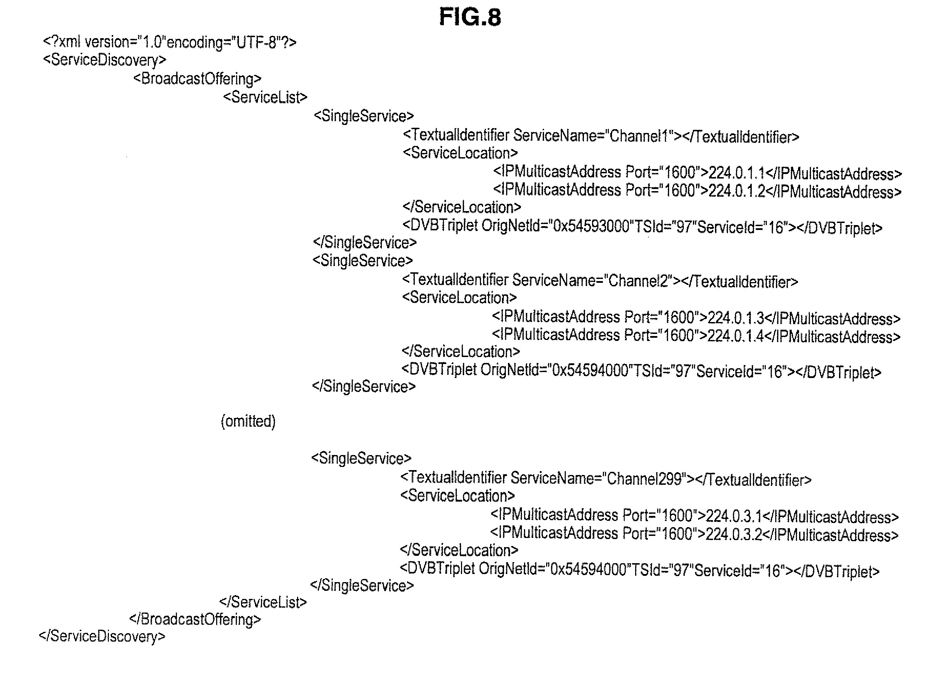

Next, referring to FIGS. 7 and 8, a mechanism of an IP packet according to the present embodiment being transmitted to an information processing apparatus will be described in detail. Incidentally, in the following, an explanation will be made based on DVB-IP (ETSI TS102 034), which is a standard for the IPTV system.

To receive the MPEG stream for each channel, the information processing apparatus 20, which is a terminal, needs to know the IP multicast address to which data of the channel is to be distributed. According to DVB-IP, the information of the channel is described in SD&S Broadcast Discovery Record. The Broadcast Discovery Record is transmitted by multicast according to DVB SD&S Transport Protocol (DVB STP) according to DVB-IP standard from an IPTV application server such as an EPG server (not shown) to the information processing apparatus 20. Incidentally, the Broadcast Discovery Record is transferred, being assigned an IP multicast address different from that of the MPEG2-TS stream.

Thus, the content server 10 existing in the content distribution system 1 according to the present embodiment needs to notify beforehand the IP multicast address assigned to each of the processing sections 11 of the content server 10 or various channel information to the IPTV application server.

FIG. 7 is an explanatory diagram for describing a data format of Broadcast Discovery Record according to DVB-IP. The information of all the channels provided by the IPTV service is described in the Broadcast Discovery Record. For example, when the IPTV service broadcasts 300 channels, the information processing apparatus 20, which is a terminal, receives a Broadcast Discovery Record in which information of 300 channels is described.

A channel name is described by a character string for TextualIdentifier@ServiceName as the channel information as shown in FIG. 7, for example, and the character string is used to display the channel name. Further, IPMulticastAddress@Address and IPMulticastAddress@Port are described an IP multicast address, to which the IP multicast packet of the channel is distributed, and a port number.

By the information processing apparatus 20, which is a terminal, joining the IP multicast address group described in the Broadcast Discovery Record by IGMP, distribution of the IP multicast packet of the desired channel is started, and the information processing apparatus 20 is enabled to receive the IP multicast packet.

Normally, an IP multicast distribution is assigned for every channel. However, the content distribution system according to the present embodiment has multiple IP multicast distributions provided to each channel. Thus, multiple IP multicast addresses are described in the Broadcast Discovery Record.

FIG. 8 is an explanatory diagram for describing an example where the Broadcast Discovery Record is expressed in XML. In this example of the Broadcast Discovery Record, service information for 300 channels is described, and an XML element of each "<SingleService>" corresponds to information of one channel.

For example, channel information at the beginning is described "Channel 1", which is a channel name (ServiceName), and two multicast addresses (one for address 224.0.1.1, port number 1600, and another for address 224.0.1.2, port number 1600). These two addresses correspond to the multicast address of an IP packet to be distributed by the first processing section 11 A and the multicast address of an IP packet to be distributed by the second processing section 11B respectively shown in FIG. 2. The channel information listed next is described "Channel 2", which is a channel name, and two multicast addresses. Although the description of the following channel information is omitted, information for 300 channels in total is to be listed and described. According to the Broadcast Discovery Record described above, the information processing apparatus 20 is enabled to know the two addresses of each channel.

In the present embodiment, the Broadcast Discovery Record according to DVB-IP standard is extended, and an XML element "<ChannelChangeInfo>" is described. The XML element "<ChannelChangelnfo>" has data indicating the maximum number of MPEG streams being multicast per channel specified in "@NumberOfStrearnsPerChannel". The example shown in FIG. 8 indicates that maximum two MPEG streams are distributed per channel.

As described above, with the content distribution method according to the present embodiment, multiple compressed data streams with different timings of appearance of reference compressed video data are distributed for one channel. Only the timings of appearance of reference compressed video data are different for the compressed data streams, and encoding conditions other than the timing of appearance are the same. Thus, the switch 30 selects an optimal stream among the multiple compressed data streams and distributes the stream to the information processing apparatus 20 which is a terminal. This minimizes the waiting time for receiving the reference compressed video data, and renders the video of the channel to be swiftly displayed.

### <Information Processing Method>

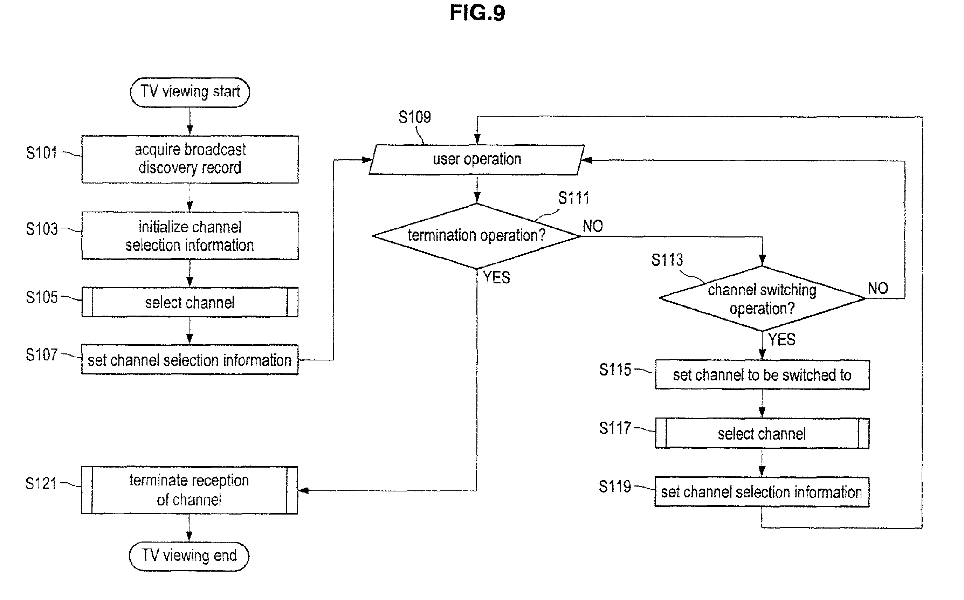

Subsequently, referring to FIGS. 9 to 13, an information processing method to be executed by the information processing apparatus 20 according to the present embodiment will be described in detail. FIG. 9 is a flow chart for describing an information processing method to be carried out by the information processing apparatus 20 according to the present embodiment.

When the power of the information processing apparatus 20 is turned on by a viewer (user) or when a TV service is selected from a service menu of the IPTV or the like, the information processing apparatus 20 according to the present embodiment starts a TV viewing process.

First, the information processing apparatus 20 acquires a Broadcast Discovery Record from an IPTV application server such as an EPG server (not shown) by using a CPU, a ROM, a RAM, a communication device, and the like provided in the apparatus (step S101). The Broadcast Discovery Record is described based on protocol according to DVB-IP standard as shown in FIG. 7, and the information processing apparatus 20 can acquire the channel information corresponding to each channel. When the channel information is not changed frequently, the channel information that is already acquired from the IPTV service may also be used.

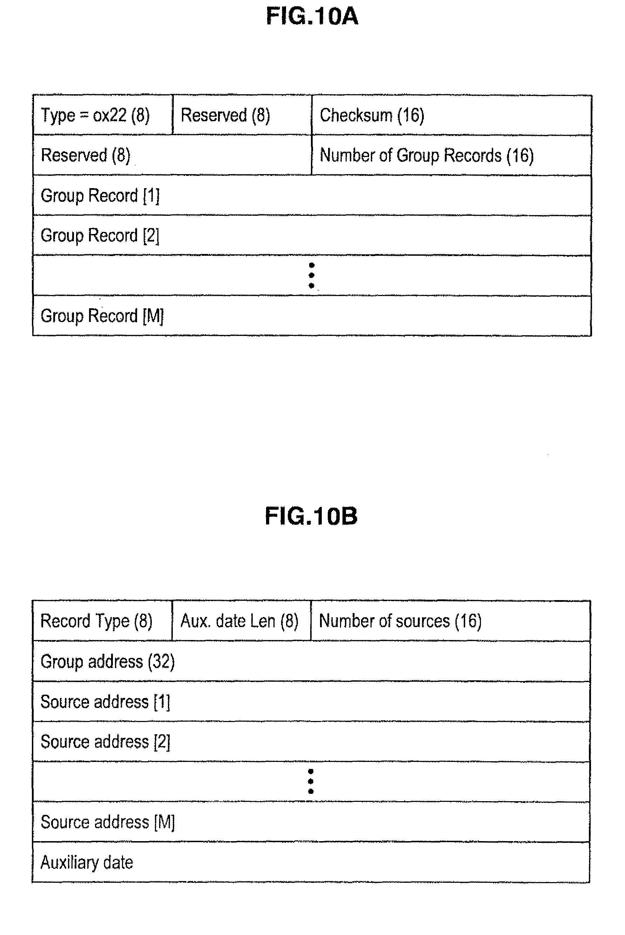

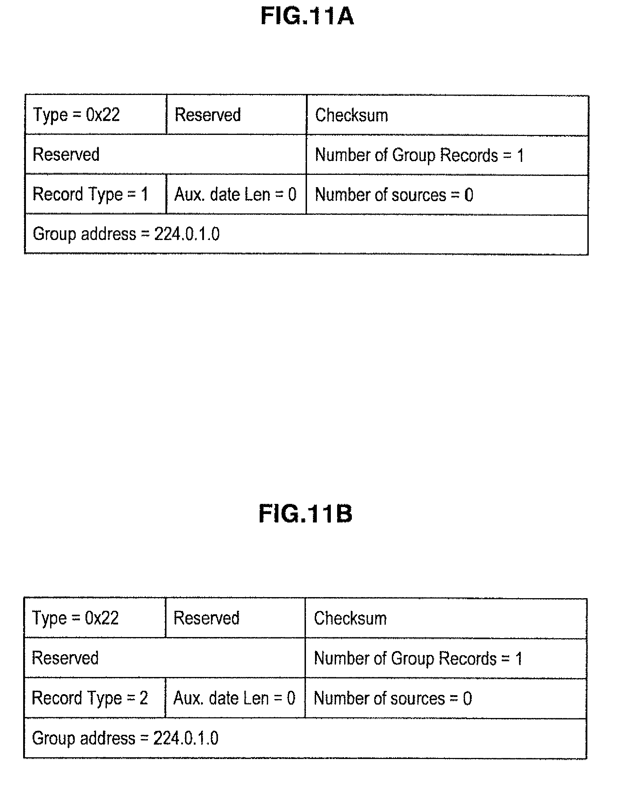

FIGS. 10A and 10B show formats of IGMP messages for the information processing apparatus 20 to perform a multicast data distribution control according to IGMP version 3 according to RFC 3376. Further, FIGS. 11A and 11B are explanatory diagrams for describing an example of the IGMP message according to the present embodiment.

When joining or leaving a multicast group, the information processing apparatus 20 uses an IGMP message in a report format as shown in FIG. 10A. Additionally, there is also an IGMP message in a query format for checking that a multicast router is participating in the multicast group. A detailed explanation of the specification of these IGMPs will be omitted.

As shown in FIG. 10A, the IGMP message in a report format has the number of records included in the report stated in "Number of Group Records" column, and has "Group Record" for the number of the stated records subsequently described in the IGMP message. FIG. 10B shows a format of each group record. As shown in FIG. 10B, "Record Type" column exists in the format of the group record, and by inputting a predetermined value in the column, the joining in or leaving from the multicast group can be specified.

As shown in FIG. 11A, for example, specifying a value "1" in "Record Type" enables to join the multicast group. This value of "1" indicates a value of "MODE_IS_INCLUDE". An example shown in FIG. 11A shows joining in the multicast group represented by 224.0.1.0.

Further, as shown in FIG. 11B, for example, specifying a value "2" in "Record Type" enables to leave from the multicast group. This value of "2" indicates a value of "MODE_IS_ENCLUDE". An example shown in FIG. 11B shows leaving from the multicast group represented by 224.0.1.0.

Subsequently, the channel selection section 201 of the information processing apparatus 20 initializes channel selection information (S103). The pieces of channel selection information to be initialized are four parameters: "CurrentChan", "CurrentAddress", "SelectChan", and "SelectAddr".

Parameter "CurrentChan" is a parameter indicating the position of the channel currently selected by the information processing apparatus 20, and parameter "CurrentAddress" is a parameter indicating the multicast address to which the channel currently selected is distributed. In the initialization, these two parameters are both set to -1. This is a value that indicates that a channel selection is currently not performed. Further, parameter "SelectChan" is a parameter indicating the channel position of the channel to be selected, and parameter "SelectAddr" is a parameter indicating the multicast address to which the MPEG2-TS stream of the selected channel is to be distributed. In the initialization, "SelectChan" is set to 1. If the channel information of a previously selected channel is held in the terminal, the channel position thereof is specified. "SelectAddress" is set to -1 in the initialization.

Subsequently, the channel selection section 201 notifies the content acquisition section 203 of the channel indicated by parameter "SelectChan", and the content acquisition section 203 performs a selection process for the channel (step S105). The selection process for the channel will be described again in detail in the following. When the content reproduction section 205 reproduces the content acquired by this process, the video of the channel is to be displayed on the screen of a display (not shown) of the information processing apparatus 20 and the sound is to be reproduced from speakers.

When the selection process is completed, the channel selection section 201 updates the channel information relating to the currently selected channel (step S107). That is, the value of parameter "SelectChan" is set in parameter "CurrentChan", and the value of parameter "SelectAddr" is set in parameter "CurrentAddr".

Subsequently, the channel selection section 201 of the information processing apparatus 20 waits for an input of a user operation (step S109).

Here, when a termination process such as pressing the power-off button of a remote control, for example, is input by a user (step S111), the channel selection section 201 generates a signal corresponding to the input operation and proceeds to the channel reception termination process of step S121. Further, when an operation for switching a channel is input by the user (step S113), the channel selection section 201 proceeds to step S 115 described later. In other cases, the channel selection section 201 returns to step S109, and waits for a user operation. In reality, besides these controls, there are also user operations such as volume control or the like. However, the description thereof in FIG. 9 will be omitted.

When a channel switching operation is performed by the user, for example, when a channel up button of a remote control is operated by the user, the channel selection section 201 increases the value of parameter "SelectChan" by 1, and when a channel down button is operated by the user, the channel selection section 201 decreases the value of parameter "SelectChan" by 1 (step S115). Here, the channel selection section 201 performs the control in such a way that the value of parameter "SelectChan" does not become a minus value or a value exceeding the total number of channels. Further, when the remote control or the like includes buttons or the like with which a channel number or the like can be directly selected, the channel selection section 201 sets a channel position corresponding to the selected channel in parameter "SelectChan". Then, the channel selection section 201 notifies the content acquisition section 203 of information relating to the newly set parameter.

The content acquisition section 203 executes, based on the value of parameter "SelectChan" notified from the channel selection section 201, the selection of the channel specified by the parameter (step S117). As a result, the newly selected channel is reproduced on the screen and from the speakers of the information processing apparatus 20. The details of the channel selection process described in step S 105 will be again described in the following.

Then, as in step S107, the channel selection section 201 updates the channel information relating to the currently selected channel (step S119).

Subsequently, the channel selection section 201 of the information processing apparatus 20 waits for the input of a user operation, and the TV viewing continues.

On the other hand, when the user operation is a termination operation, the content acquisition section 203 executes the channel reception termination process (step S121). The channel reception termination process will be described again in detail in the following.

This enables the information processing apparatus 20 to terminate the TV viewing, and to return to the IPTV service menu or moves on to other functions of the terminal.

### [Channel selection process]

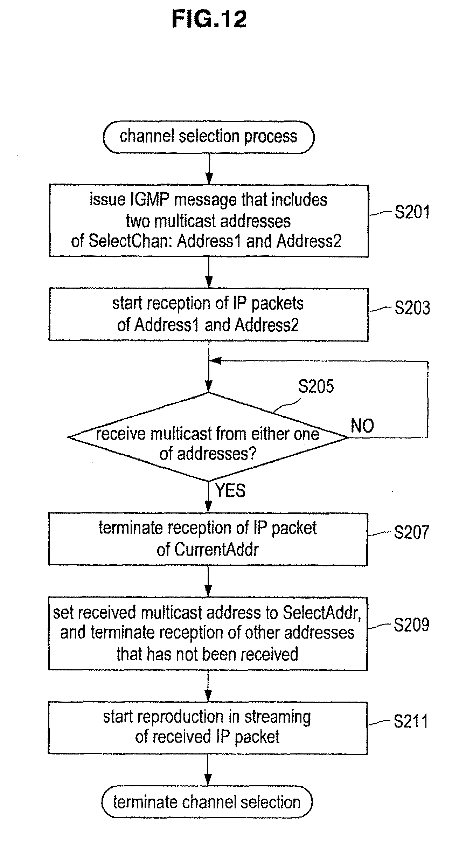

Subsequently, referring to FIG. 12, the channel selection process to be executed by the information processing apparatus 20 according to the present embodiment will be described in detail. FIG. 12 is a flow chart for describing the channel selection process of the information processing method according to the present embodiment.

More particularly, the content acquisition section 203 first acquires the multicast address of a channel from the Broadcast Discovery Record. In the example shown in FIG. 8, when 1 is set in parameter "SelectChan", "<SingleService"> at the beginning is the corresponding channel information. As shown in FIG. 8, two multicast addresses are described in "<ServiceLocation>" of the channel information. In the example shown in FIG. 8, 224.0.1.1 is set in parameter "Address 1 ", and 224.0.1.2 is set in parameter "Address2".

The content acquisition section 203 issues an IGMP message including multicast addresses of multiple channels corresponding to the selected channel from the Broadcast Discovery Record (step S201). This triggers the information processing apparatus 20 to start a distribution switching of a multicast packet. The issuance of IGMP message is performed in the report format according to IGMP version 3 specified in RFC-3376 shown in FIGS. 10A and 10B.

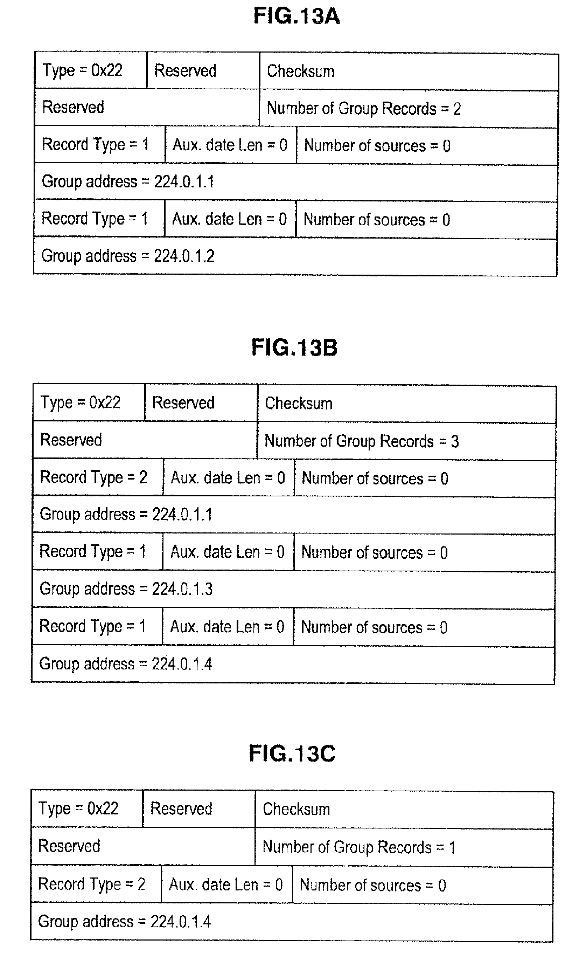

Examples of the IGMP packet are shown in FIG. 13A to 13C.
FIG. 13A shows a case where parameter "CurrentChan" is -1, that is, a case where there is no data corresponding to the multicast address that is already being distributed. FIG. 13A indicates that RecordType=1 (MODE_IS_INCLUDE) is specified to two multicast groups of multiple multicast addresses (224.0.1.1 and 224.0.1.2 in the example) of parameter "SelectChan" (1 in the example). This indicates to join in two multicast addresses corresponding to a certain channel to start the multicast data distribution.
FIG. 13B shows an example of IGMP packet in a case where parameter "CurrentChan" is other than -1, that is, in a case where there is a multicast address that is already being distributed. Here, RecordType=2 (MODE_IS_EXCLUDE) is specified to the multicast group of "CurrentAddress" (224.0.1.1 in the example) of "CurrentChan" (1 in the example) to instruct the stop of distribution. Moreover, the IGMP packet instructs the start of distribution by specifying RecordType=1 (MODE_IS_INCLUDE) to the multicast group of multiple multicast addresses (224.0.1.3 and 224.0.1.4 in the example) of "SelectChannel" (2 in the example).

According to IMGP version 3, as shown in FIG. 13B, instructions can be collectively performed by one IGMP packet, and thus, there is the merit that implementation where multicast addresses are not redundantly distributed to the access network at the time of switching is possible.

By issuing such IGMP packet and transmitting the issued IGMP packet to the switch 30, the switch 30 performs the later-described stream switching process and distributes a multicast packet described in the IGMP packet to the information processing apparatus 20. The content acquisition section 203 starts receiving IP packets of the Address1 and the Address2 required in the IGMP packet (step S203).

The switch 30 selects a stream that is the most optimum for channel switching from the streams of the multiple multicast addresses that are required by the information processing apparatus 20, and distributes only the multicast address of the selected stream, as described later. Moreover, the switch 30 ignores distribution requests from the information processing apparatus 20 for other streams that have not been selected.

To be on standby during the maximum required switching time until the switching distribution of the stream selected by the switch 30 is completed, the content acquisition section 203 will be on standby when a multicast packet is not being received (step S205). Note that when there is a possibility of an IGMP packet being lost in the network, the content acquisition section 203 may transmit multiple packets in step S201, or may perform a process of retransmitting the IGMP packet, providing a timeout or the like in step S203.

As a result of the standby in step S205, the distribution switching of multicast is already completed after the standby. Therefore, when a channel that was previously selected exists, the content acquisition section 203 terminates the reception of the multicast packet of the corresponding "CurrentAddress" (step S207).

The content acquisition section 203 refers to the received multicast packet to lookup the multicast address corresponding to the received multicast packet, and set this multicast address to SelectAddress (step S205). Moreover, the content acquisition section 203 ends receiving multicast addresses that has not been received (that is, the multicast addresses that have not been selected in the switch 30) (step S205).

Then, the content acquisition section 203 transmits the received multicast packet to the content reproduction section 205, and the content reproduction section 207 starts the reproduction of the MPEG2-TS stored in the multicast packet of a channel that is newly being received (S211). More specifically, a video is displayed on the display (not shown) of the information processing apparatus 20 after the MPEG2-TS packet including IDR picture is received. In this manner, the selection process for a channel is completed, and the viewing of the IPTV television continues.

### [Channel Reception Termination Process]

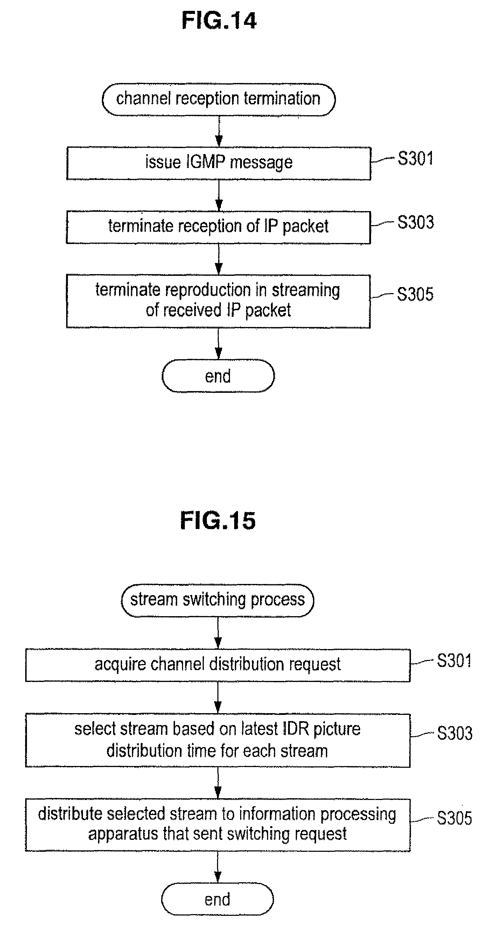

Subsequently, referring to FIG. 14, a process of channel reception termination to be executed by the information processing apparatus 20 will be described in detail.

First, the content acquisition section 203 stops the reception of a multicast packet currently being received. The reception of a multicast packet can be stopped by transmitting the IGMP report message as shown in FIG. 13C (step S301). As shown in FIG. 13C, the content acquisition section 203 specifies RecordType=2 to the multicast group of parameter "CurrentAddress" (224.0.1.4 in the example) and transmits the IGMP message. This leads the content acquisition section 203 to stop the multicast packet distribution.

Next, the content acquisition section 203 terminates the reception of the multicast (step S303). Then, the content reproduction section 205 terminates the reproduction of the MPEG2-TS stream (step S305). By performing the processes, the process of channel reception termination is completed.

As described above, according to the information processing method according to the present embodiment, when performing a channel selection process, a request for joining is to be performed to all of multiple multicast addresses corresponding to channels desired to be viewed. Therefore, in the information processing method according to the present embodiment, it isn't necessary to determine in which address is to be joined among multiple multicast addresses corresponding to the channels desired to be viewed. As the result, the information processing apparatus that performs the information processing method according to the present embodiment can perform more easily the channel selection process.

### <Stream switching method>

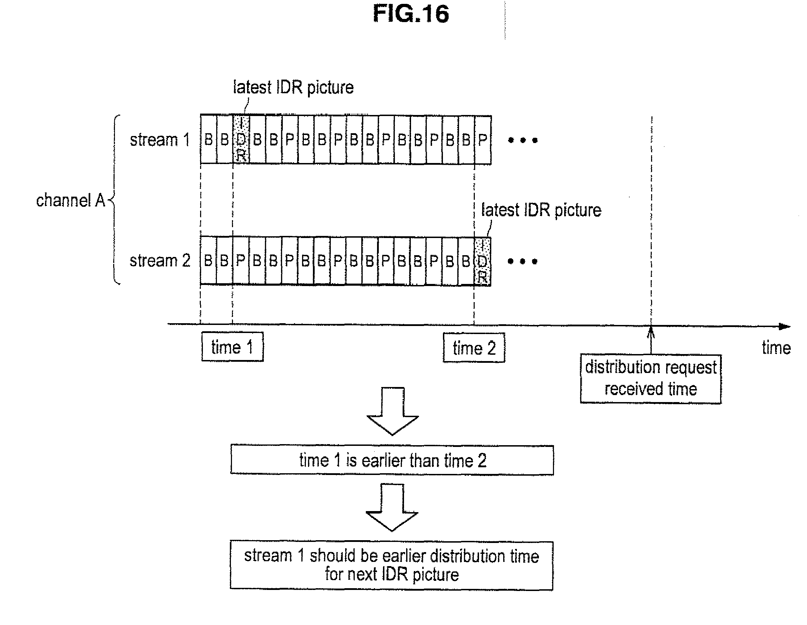

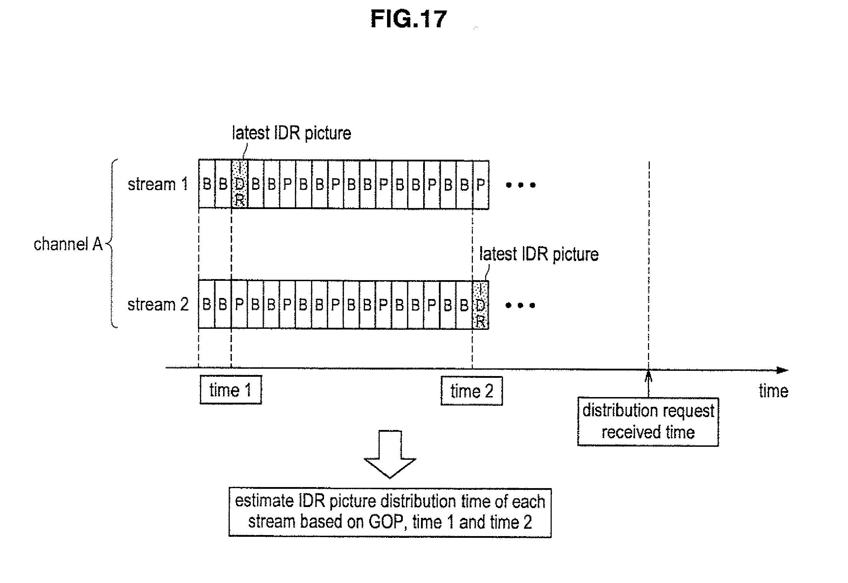

Subsequently, referring to FIG. 15 to 17, a stream switching method that the switch 30 performs, and that is an example of the network device according to the present embodiment, will be described in detail. FIG. 15 is a flow chart for illustrating a stream switching process according to the embodiment, and FIG. 16 and 17 are explanatory diagrams for illustrating a stream switching process according to the embodiment.

Prior to the explanation of the stream switching method according to the present embodiment, it is assumed that the switch 30 that is an example of a network device has analyzed all the compressed data streams corresponding to the video/audio content that is distributing in the content distribution system 1. And it is also assumed that this enables the switch 30 to detect the latest distribution time point of the reference compressed video data for all of the compressed data streams.

When the information processing apparatus 20 that is a terminal needs to switch contents to be distributed to the information processing apparatus 20 by a channel switching operation or the like, the content acquisition section 203 of the information processing apparatus 20 transmits a distribution request for content to the switch 30.

The distribution request processing section 305 of the switch 30 acquires the distribution request for content due to the channel switching or the like that has been transmitted from the information processing apparatus 20 (step S301). Subsequently, the distribution request processing section 305 specifies a multicast address of the channel desired to be distributed that is described in the acquired distribution request for content.

Subsequently, the distribution request processing section 305 inquires the stream analysis section 303 about the latest distribution time point of the reference compressed video data regarding the multicast address that is described in the distribution request.

The stream analysis section 303 transmits the latest distribution time point of the reference compressed video data to the distribution request processing section 305 in response to the inquiry from the distribution request processing section 305.

Next, the distribution request processing section 305 selects optimal compressed data streams based on the distribution time point of the latest reference compressed video data (IDR picture, for example) of each stream (step S303). More specifically, as shown in FIG. 16 for example, the distribution request processing section 305 selects streams depending on how relatively old the distribution time point is, or depending on how relatively old the distribution time point is and the size of the GOP as shown in FIG. 17 for example.

The selection method shown in FIG. 16 is a method to select streams to be distributed to the information processing apparatus 20 depending on how relatively old the latest distribution time point of each compressed data streams corresponding to the channel (Channel A) described in the distribution request is. In the case shown in FIG. 16, since the distribution time point of Stream 1 is older than the distribution time point of Stream 2, the distribution request processing section 305 determines that Stream 1 comes earlier for the next distribution time point for the reference compressed video data (IDR picture). Therefore, the distribution request processing section 305 notifies the distribution switching section 307 of the multicast address corresponding to Stream 1 of Channel A.

The selection method shown in FIG. 17 is a method to select streams to be distributed to the information processing apparatus 20 based on how relatively old the distribution time point is and the size of the GOP. In the case shown in FIG. 17, the distribution request processing section 305 predicts the distribution time point of the next reference compressed video data in each stream based on Time 1 that is the latest distribution time point in Stream 1, Time 2 that is the latest distribution time point in Stream 2, and the size of GOP. In the case of FIG. 17, considering the relative positional relationship between the time when the distribution request is received and the size of GOP in each stream, Stream 1 comes earlier than Stream 2 for the next distribution time point (scheduled distribution time point) of the reference compressed video data (IDR picture). Therefore, the distribution request processing section 305 notifies the distribution switching section 307 of the multicast address corresponding to Stream 1 of Channel A, and the calculated scheduled distribution time point.

Next, the distribution switching section 307 of the switch 30 distributes the streams selected by the distribution request processing section 305 to the information processing apparatus 20 that has transmitted the distribution request (step S305). This renders compressed data streams corresponding to any address of the multicast addresses, which the information processing apparatus 20 has described in the distribution request, to be distributed to the information processing apparatus 20.

Heretofore, a high-speed channel switching in the IPTV system according to the present embodiment has been described. According to the present embodiment, an embodiment other than the above-described embodiment can easily be conceived. For example, other embodiments as described below can be conceived.

According to the embodiment according to the present invention, to stop the channel switching or to change a selected channel based on an interruption by a user operation during the channel switching process, a discontinuation process can be easily implemented during the selection process shown in FIG. 12.

The embodiment according to the present invention has been describing a case of H.264/AVC. However, even if MPEG2 video compression is used, by assuming that the IDR picture is an I picture, embodiments of the present invention can be easily applied to the IPTV system using MPEG2 video compression.

Further, according to the embodiment according to the present invention, compressed video data and audio data are multiplexed by MPEG2-TS. However, also in a case where compressed video and audio data are distributed in separate IP packets, according to embodiments of the present invention, an IPTV system realizing a high-speed channel switching by switching the IP packet distributions can be easily realized.

Further, according to the embodiment according to the present invention, compressed video data and audio data of only one video/audio signal are multiplexed by MPEG2-TS and stored in an IP packet, and the switching of distribution is performed. However, the compressed video data and audio data of multiple video/audio signals with MPEG2-TS may be multiplexed to distribute the same, and only the compressed video/audio packets corresponding to the selected video/audio signal may be filtered and transmitted in a network path to the information processing apparatus 20. This easily realizes an IPTV system enabling a high-speed channel switching similar to that of the present embodiment.

Further, by using the function of IMGP version 3 and switching the distribution of multicast groups by one IGMP packet, the embodiment according to the present invention prevents the redundant distribution of packets to the access network during switching and limits the data bandwidth to be used by the IPTV system in the access network. However, even when IGMP version 2 is used, also by performing the process of leaving the multicast group and joining, after the distribution is stopped, a multicast group to be switched to, the data bandwidth to be used by the IPTV system can be limited.

Further, according to the embodiment according to the present invention, the content server 10 encodes the multiple MPEG2-TS streams of each channel and distributes the same via the core network. Here, in an environment where there is a limit on the bandwidth of the core network, the following can also be performed. That is, the content server 10 distributes through the core network one encoded packet for each channel, and arranges another content server, such as an edge server or an edge router, in the middle of the distribution network such an the access network. The another content server generates, for the received MPEG2-TS stream, an MPEG2-TS stream with different IDR picture distribution timing based on the video/audio signal, and distributes the same. In such a manner, the bandwidth of the core network can be limited, and, at the same time, a high-speed channel switching similar to that of the IPVE system described by the present embodiment can be realized.

### (Hardware Configuration)

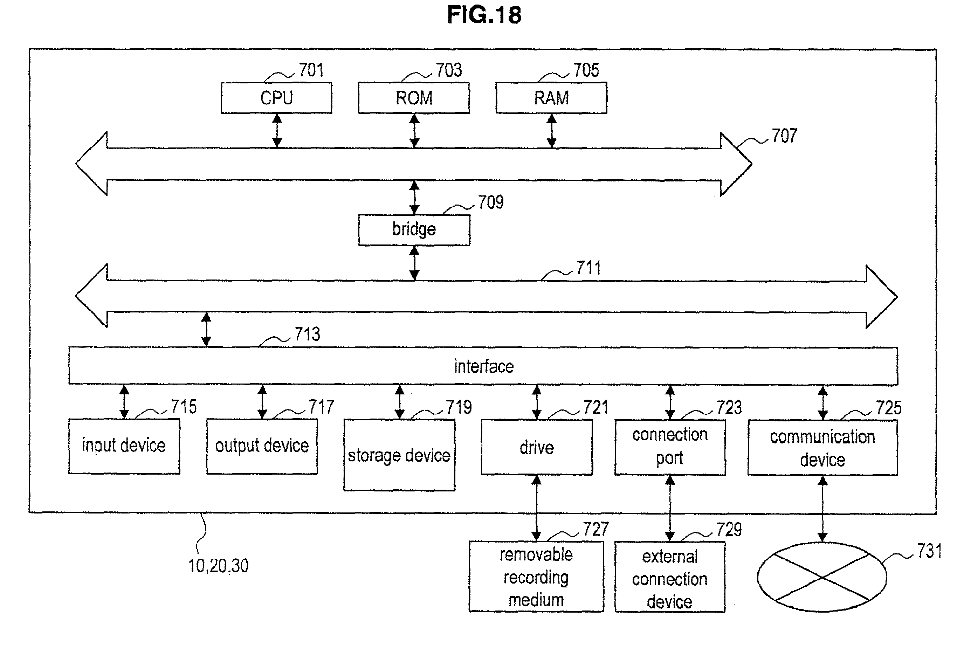

Next, the hardware configuration of the content server 10 according to the embodiment of the present invention will be described in detail with reference to FIG. 18. FIG. 18 is a block diagram for illustrating the hardware configuration of the content server 10 according to the embodiment of the present invention.

The content server 10 mainly includes a CPU 701, a ROM 703, and a RAM 705. Furthermore, the content server 10 also includes a host bus 707, a bridge 709, an external bus 711, an interface 713, an input device 715, an output device 717, a storage device 719, a drive 721, a connection port 723, and a communication device 725.

The CPU 701 serves as an arithmetic processing apparatus and a control device, and controls the overall operation or a part of the operation of the content server 10 according to various programs recorded in the ROM 703, the RAM 705, the storage device 719, or a removable recording medium 727. The ROM 703 stores programs, operation parameters, and the like used by the CPU 701. The RAM 705 primarily stores programs used in execution of the CPU 701 and parameters and the like varying as appropriate during the execution. These are connected with each other via the host bus 707 configured from an internal bus such as a CPU bus or the like.

The host bus 707 is connected to the external bus 911 such as a PCI (Peripheral Component Interconnect/Interface) bus via the bridge 709.

The input device 715 is an operation means operated by a user, such as a mouse, a keyboard, a touch panel, buttons, a switch and a lever. Also, the input device 715 may be a remote control means (a so-called remote control) using, for example, infrared light or other radio waves, or may be an externally connected device 729 such as a mobile phone or a PDA conforming to the operation of the content server 10. Furthermore, the input device 715 generates an input signal based on, for example, information which is input by a user with the above operation means, and is configured from an input control circuit for outputting the input signal to the CPU 701. The user of the content server 10 can input various data to the content server 10 and can instruct the content server 10 to perform processing by operating this input apparatus 715.

The output device 717 is configured from a device capable of visually or audibly notifying acquired information to a user. Examples of such device include display devices such as a CRT display device, a liquid crystal display device, a plasma display device, an EL display device and lamps, audio output devices such as a speaker and a headphone, a printer, a mobile phone, a facsimile machine, and the like. For example, the output device 717 outputs a result obtained by various processings performed by the content server 10. More specifically, the display device displays, in the form of texts or images, a result obtained by various processes performed by the content server 10. On the other hand, the audio output device converts an audio signal such as reproduced audio data and sound data into an analog signal, and outputs the analog signal.

The storage device 719 is a device for storing data configured as an example of a storage section of the content server 10 and is used to store data. The storage device 719 is configured from, for example, a magnetic storage device such as a HDD (Hard Disk Drive), a semiconductor storage device, an optical storage device, or a magneto-optical storage device. This storage device 719 stores programs to be executed by the CPU 701, various data, and various data obtained from the outside.

The drive 721 is a reader/writer for recording medium, and is embedded in the content server 10 or attached externally thereto. The drive 721 reads information recorded in the attached removable recording medium 727 such as a magnetic disk, an optical disk, a magneto-optical disk, or a semiconductor memory, and outputs the read information to the RAM 705. Furthermore, the drive 721 can write in the attached removable recording medium 727 such as a magnetic disk, an optical disk, a magneto-optical disk, or a semiconductor memory. The removable recording medium 727 is, for example, a DVD medium, an HD-DVD medium, or a Blu-ray medium. The removable recording medium 727 may be a CompactFlash (CF; registered trademark), a flash memory, an SD memory card (Secure Digital Memory Card), or the like. Alternatively, the removable recording medium 727 may be, for example, an IC card (Integrated Circuit Card) equipped with a noncontact IC chip or an electronic appliance.

The connection port 723 is a port for allowing devices to directly connect to the content server 10. Examples of the connection port 723 include a USB (Universal Serial Bus) port, an IEEE1394 port, a SCSI (Small Computer System Interface) port, and the like. Other examples of the connection port 723 include an RS-232C port, an optical audio terminal, an HDMI (High-Definition Multimedia Interface) port, and the like. By the externally connected apparatus 729 connecting to this connection port 723, the content server 10 directly obtains various data from the externally connected apparatus 729 and provides various data to the externally connected apparatus 729.

The communication device 725 is a communication interface configured from, for example, a communication device for connecting to a communication network 731. The communication device 725 is, for example, a wired or wireless LAN (Local Area Network), Bluetooth (registered trademark), a communication card for WUSB (Wireless USB), or the like. Alternatively, the communication device 725 may be a router for optical communication, a router for ADSL (Asymmetric Digital Subscriber Line), a modem for various communications, or the like. This communication device 725 can transmit and receive signals and the like in accordance with a predetermined protocol such as TCP/IP on the Internet and with other communication devices, for example. The communication network 731 connected to the communication device 725 is configured from a network and the like, which is connected via wire or wirelessly, and may be, for example, the Internet, a home LAN, infrared communication, radio wave communication, satellite communication, or the like.

Heretofore, an example of the hardware configuration capable of realizing the functions of the content server 10 according to the embodiment of the present invention has been shown. Each of the structural elements described above may be configured using a general-purpose material, or may be configured from hardware dedicated to the function of each structural element. Accordingly, the hardware configuration to be used can be changed as appropriate according to the technical level at the time of carrying out the present embodiment.

Further, the information processing apparatus 20 and the switch 30 according to the present embodiment of the invention has the same hardware configuration and realizes almost the same effects as the content server 10 according to the present embodiment of the invention, and accordingly, the detailed description thereof is omitted.

### (Summary)

As described above, according to the present embodiment, even in an environment where there is a limit on the data bandwidth of the access network to an IPTV subscriber's premise, an IPTV system that is capable of providing a high quality video and that enables a high-speed channel switching can be realized without installing an expensive network device or a special content server in the vicinity of the access network.

Further, according to the present embodiment, at the time of channel switching, a blackout period where no video is displayed or a time during which video of a channel before switching is displayed in a paused state can be minimized, and a seamless channel switching can be provided to the viewer.

Further, according to the present embodiment, since a channel can be viewed regardless of which of the multicast streams assigned to respective channels is received, an IPTV system in which a terminal (an existing terminal) that does not select a multicast address coexists can be established.

A preferred embodiment of the present invention has been explained in detail above with reference to the attached drawings, embodiments of the present invention are not limited to this example. It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A network device comprising:
a stream analysis section for analyzing each of multiple compressed data streams that are generated from single video/audio content in such a manner that positions of video frames corresponding to reference compressed video data and time points of distribution of the reference compressed video data are different to each other, the reference compressed video data being data, in time series data generated by compressing a video signal, for which decoding of a subsequent video signal can be started without depending on previous data, to detect a latest time point of distribution of the reference compressed video data;
a distribution request processing section for receiving a distribution request for video/audio content transmitted from an information processing apparatus which reproduces the video/audio content as well as using a distribution time point of the reference compressed video data that is detected by the stream analysis section, to select a compressed data stream to be distributed to the information processing apparatus among the multiple compressed data streams corresponding to the video/audio content related to the distribution request; and
a distribution switching section for switching the compressed data streams to be distributed to the information processing apparatus that transmitted the distribution request into the compressed data stream selected by the distribution request processing section.

2. The network device according to claim 1,
wherein the distribution request processing section
holds information relating to a time interval from the distribution of the reference compressed video data to the distribution of a subsequent reference compressed video data,
calculates a time point to distribute the reference compressed video data for a next time for each of the multiple compressed data streams based on a distribution time point of the latest reference compressed video data detected by the stream analysis section and the information relating to the time interval, and
selects the compressed data stream, of which time until the calculated time is the shortest, as a compressed data stream to be distributed to the information processing apparatus.

3. The network device according to claim 2,
wherein the distribution switching section performs a process of switching into the compressed data streams so as to complete switching into the compressed data stream selected by the distribution request processing section by the time point calculated by the distribution request processing section.

4. The network device according to claim 1,
wherein the network device further includes a buffer to store temporarily compressed data streams for delay time necessary for a process of switching the compressed data streams by the distribution switching section, and
wherein the distribution switching section performs the process of switching of the compressed data streams while distributing the compressed data streams stored in the buffer to the information processing apparatus.

5. An information processing apparatus comprising,
a content acquisition section that requests a network device that performs a process of switching multiple compressed data streams generated from single video/audio content in such a manner that positions of video frames corresponding to reference compressed video data and time points of distribution of the reference compressed video data are different to each other, the reference compressed video data being data, in time series data generated by compressing a video signal, for which decoding of a subsequent video signal can be started without depending on previous data, for a distribution of all the multiple compressed data streams corresponding to the video/audio content necessary to be acquired, and that acquires the video/audio content from the network device.

6. The information processing apparatus according to claim 5,
wherein the multiple compressed data streams are assigned with unique network addresses which are different to each other and,
wherein the content acquisition section notifies the network device of the network addresses which are assigned to all the compressed data streams corresponding to the video/audio content necessary to be acquired, and sets the network addresses assigned to the compressed data streams that are distributed from the network device, among the network addresses notified to the network device, as a network address corresponding to the video/audio content necessary to be acquired.

7. A stream switching method comprising the steps of:
detecting a latest time point of distribution of the reference compressed video data, after analyzing each of multiple compressed data streams that are generated from single video/audio content in such a manner that positions of video frames corresponding to reference compressed video data and time points of distribution of the reference compressed video data are different to each other, the reference compressed video data being data, in time series data generated by compressing a video signal, for which decoding of a subsequent video signal can be started without depending on previous data;
receiving a distribution request for video/audio content transmitted from an information processing apparatus which reproduces the video/audio content;
selecting compressed data streams to be distributed to the information processing apparatus among the multiple compressed data streams corresponding to the video/audio content related to the distribution request, using a distribution time point of the reference compressed video data detected in the step of detecting the time point of distribution of the reference compressed video data; and
switching the compressed data streams to be distributed to the information processing apparatus that transmitted the distribution request into the compressed data stream selected by the step of selecting the compressed data streams.

8. An information processing method comprising the steps of:
requesting a network device that performs a process of switching multiple compressed data streams generated from single video/audio content in such a manner that positions of video frames corresponding to reference compressed video data and time points of distribution of the reference compressed video data are different to each other, the reference compressed video data being data, in time series data generated by compressing a video signal, for which decoding of a subsequent video signal can be started without depending on previous data, for a distribution of all the multiple compressed data streams corresponding to the video/audio content necessary to be acquired; and
acquiring the compressed data streams corresponding to the video/audio content that is distributed from the network device.

9. A program causing a computer to realize the functions of:
a stream analysis section for analyzing each of multiple compressed data streams that are generated from single video/audio content in such a manner that positions of video frames corresponding to reference compressed video data and time points of distribution of the reference compressed video data are different to each other, the reference compressed video data being data, in time series data generated by compressing a video signal, for which decoding of a subsequent video signal can be started without depending on previous data, to detect a latest time point of distribution of the reference compressed video data;
a distribution request processing section for receiving a distribution request for video/audio content transmitted from an information processing apparatus which reproduces the video/audio content as well as using a distribution time point of the reference compressed video data that is detected by the stream analysis section, to select a compressed data stream to be distributed to the information processing apparatus among the multiple compressed data streams corresponding to the video/audio content related to the distribution request; and
a distribution switching section for switching the compressed data streams to be distributed to the information processing apparatus that transmitted the distribution request into the compressed data stream selected by the distribution request processing section.

10. A program causing a computer to realize a function of
a content acquisition section that requests a network device that performs a process of switching multiple compressed data streams generated from single video/audio content in such a manner that positions of video frames corresponding to reference compressed video data and time points of distribution of the reference compressed video data are different to each other, the reference compressed video data being data, in time series data generated by compressing a video signal, for which decoding of a subsequent video signal can be started without depending on previous data, for a distribution of all the multiple compressed data streams corresponding to the video/audio content necessary to be acquired, and that acquires the video/audio content from the network device.

11. A content distribution system comprising:
a content server including multiple encoders for encoding video/audio content in such a manner that positions of video frames corresponding to reference compressed video data and time points of distribution of the reference compressed video data are different to each other, the reference compressed video data being data, in time series data generated by compressing a video signal, for which decoding of a subsequent video signal can be started without depending on previous data, and that generates multiple compressed data streams from the single video/audio content;
an information processing apparatus for reproducing the compressed data streams that are corresponding to the multiple distributed video/audio content and that are to be distributed by the content server; and
a network device for distributing the multiple compressed data streams distributed by the one or multiple content servers to the information processing apparatus desired for a distribution of the compressed data streams; and
wherein the network device includes:
a stream analysis section for detecting a latest time point of distribution of the reference compressed video data after analyzing the multiple compressed data streams distributed by the one or multiple content servers;
a distribution request processing section for receiving a distribution request for video/audio content transmitted from an information processing apparatus as well as using a distribution time point of the reference compressed video data that is detected by the stream analysis section, to select a compressed data stream to be distributed to the information processing apparatus among the multiple compressed data streams corresponding to the video/audio content related to the distribution request; and
a distribution switching section for switching the compressed data streams to be distributed to the information processing apparatus that transmitted the distribution request into the compressed data stream selected by the distribution request processing section,
wherein the information processing apparatus requests the network device for a distribution of all the multiple compressed data streams corresponding to the video/audio content necessary to be acquired, and includes a content acquisition section for acquiring the video/audio content from the network device.
